# EUROPÄISCHE PATENTSCHRIFT

(11) **EP 3 149 059 B1**
(45) Veröffentlichungstag und Bekanntmachung des Hinweises auf die Patenterteilung: **12.09.2018**
(21) Anmeldenummer: 15717162.0
(22) Anmeldetag: 16.04.2015
(51) Int. Cl.: C08F 8/30, C09K 15/18, C09K 21/10

(54) **VERWENDUNG VON OXYIMID-ENTHALTENDEN COPOLYMEREN ODER POLYMEREN ALS FLAMMSCHUTZMITTEL, STABILISATOREN, RHEOLOGIEMODIFIKATOREN FÜR KUNSTSTOFFE, INITIATOREN FÜR POLYMERISATIONS- UND PFROPFPROZESSE, VERNETZUNGS- ODER KOPPLUNGSMITTEL SOWIE SOLCHE COPOLYMERE ODER POLYMERE ENTHALTENDE KUNSTSTOFFFORMMASSEN**
USE OF COPOLYMERS OR POLYMERS CONTAINING OXO IMIDE MOIETIES AS FLAME RETARDANTS, STABILISERS, RHEOLOGY MODIFIERS FOR RESINS, INITIATORS FOR POLYMERISATION AND GRAFTING, CROSS-LINKING AGENTS OR COUPLERS AS WELL AS MOULDING MATTERS CONTAINING SUCH (CO)POLYMERS
UTILISATION DE (CO)POLYMÈRES RENFERMANT DES FRAGMENTS OXO IMIDES COMME RÉTARDATEURS AUX FLAMMES, STABILISEURS, MODIFCATEURS DE RHÉOLOGIE POUR LES MATIÉRES EN PLASTIQUE, AMORCEURS POUR LES PROCÉDÉS DE POLYMERISATION ET DE GREFFAGE, COMME RETICULANTS ET LIANTS, AINSI QUE MATIÈRES DE MOULAGE DONT CONTÉNANT

(30) Priorität: 28.05.2014 DE 102014210214
(43) Veröffentlichungstag der Anmeldung: 05.04.2017
(73) Patentinhaber: Fraunhofer-Gesellschaft zur Förderung der angewandten Forschung e.V., 80686 München (DE)
(72) Erfinder: PFAENDNER, Rudolf, 64668 Rimbach (DE); MAZUROWSKI, Markus, 65462 Ginsheim-Gustav (DE)
(74) Vertreter: Pfenning, Meinig & Partner mbB
(86) Internationale Anmeldenummer: PCT/EP2015/058311
(87) Internationale Veröffentlichungsnummer: WO 2015/180888

(56) Entgegenhaltungen:
- EP-A2- 0 303 988
- EP-A2- 0 767 182
- WO-A1-97/47566
- WO-A1-2012/052376
- WO-A1-2014/154636
- WO-A1-2014/195440
- JP-A- 2007 016 162
- US-A- 3 488 329
- US-A- 4 160 739
- US-A- 5 369 198
- US-A1- 2013 023 609

## Beschreibung

Die vorliegende Erfindung betrifft die Verwendung von Oxyimid-enthaltenden Copolymeren oder Polymeren als Flammschutzmittel für Kunststoffe, Stabilisatoren für Kunststoffe, Rheologiemodifikatoren für Kunststoffe sowie als Initiatoren für Polymerisations- und Pfropfprozesse und/oder Vernetzungs- oder Kopplungsmittel. Zudem betrifft die vorliegende Erfindung Kunststoffformmassen, die solche Copolymere oder Polymere enthalten.

Additive sind wesentliche Formulierungsbestandteile in Kunststoffen, um z.B. die Verarbeitung und einen dauerhaften Einsatz zu ermöglichen, sowie die Kunststoff-Eigenschaften zu verändern und an ein gefordertes Eigenschaftsprofil anzupassen. Typische Vertreter von Kunststoffadditiven sind Stabilisatoren wie Antioxidantien und Lichtschutzmittel, Weichmacher, Gleitmittel, Antistatika, Schlagzähigkeitsmodifikatoren, Nukleierungsmittel und Flammschutzmittel. Viele kommerzielle Produkte der genannten Substanzklassen sind jedoch niedermolekulare Verbindungen, die damit vergleichsweise flüchtig sind oder unter den entsprechenden Bedingungen leicht aus dem Kunststoff migrieren und in die Umwelt gelangen können. Gleichzeitig verliert mit dem Verlust der Additive der Kunststoff die damit eingebrachten Eigenschaften.

Der Wirkung von bestimmten Additiven wie Stabilisatoren und Flammschutzmitteln liegt meist ein Mechanismus zu Grunde, dessen wesentliches Element die Bildung von Radikalen ist. Zum Beispiel übertragen die häufig als Stabilisatoren eingesetzten phenolischen Antioxidantien im ersten Reaktionsschritt ein Wasserstoffatom auf ein bei Abbauprozessen des Kunststoffs entstehendes Polymerradikal, bilden gleichzeitig ein stabiles Phenoxyl-Radikal und unterbrechen damit den autooxidativen Prozess (siehe z.B. Plastics Additives Handbook, Herausgeber H. Zweifel, Hanser Verlag, München, 5th edition, 2001). Eine besondere Klasse von Flammschutzmitteln stellen Radikalgeneratoren dar, die im Brandfall durch einen damit induzierten sehr schnellen Abbauprozess eine Flammschutzwirkung ausüben (siehe z.B. C. E. Wilen, R. Pfaendner, J. Appl. Pol. Sci. 2013, 129, 925). Auch bei den erwähnten Radikalbildnern handelt es sich häufig um niedermolekulare Substanzen, deren Wirkung dann durch die bereits erwähnte Flüchtigkeit oder Migration mit der Zeit abnehmen kann. Weiterhin können, insbesondere wenn höhere Konzentrationen erforderlich sind, niedermolekulare Zusatzstoffe typische Kunststoff-Eigenschaften wie mechanische, elektrische und rheologische Eigenschaften negativ beeinflussen. Es besteht daher ein Bedarf an hochmolekularen, d.h. polymeren Radikalbildnern, die die erwünschten Eigenschaften z.B. die Funktion als Stabilisator oder Flammschutzmittel, bieten, aber die erwähnten Nachteile nicht aufweisen und die darüber hinaus durch vergleichsweise einfache synthetische Prozesse zugänglich sind.

Grundsätzlich sind Copolymere mit Maleinsäureanhydrid-ähnlichen Strukturelementen bekannt und z.B. als Photoresists (JP 10213912), optischer Film (JP 2007016163), Verdicker bei der Erdölgewinnung (CN 102031101) und als Matrixmaterial für die Peptidsynthese (US 3488329, US 3578641) bekannt. Auf dem Gebiet der Stabilisatoren gibt es Beispiele zu polymeren Verbindungen, deren Herstellungsprinzipien z.B. in J. Pospisil et al, Macromol. Symp. 2001, 164, 389, beschrieben sind. Die Herstellung von radikalbildenden oder mit Radikalen reagierenden Stabilisatoren ist jedoch schwierig, da diese in die üblichen Polymerisationsprozesse wie z.B. in eine radikalische Polymerisation eingreifen. Eine geeignete Herstellungsmethode für polymere Stabilisatoren ist daher die polymeranaloge Umsetzung. Diese ist z.B. in EP 0935619 beschrieben, wobei dort neben einer stabilisierenden auch noch eine kompatibilisierende Wirkung ausgeübt und die Produkte daher besonders für Polymerblends geeignet sind. Ein Beispiel für ein polymeres Flammschutzmittel ist Ammoniumpolyphosphat, wobei es sich hier jedoch um eine unschmelzbare anorganische Verbindung handelt. Polymere Flammschutzmittel, die darüber hinaus halogenfrei sind, sind bisher kaum bekannt.

Aufgabe der vorliegenden Erfindung war es daher Radikalbildner auf polymerer Basis zur Verfügung zu stellen, die in Kunststoffen als Stabilisatoren, Flammschutzmittel, Rheologiemodifikatoren, Initiatoren für Polymerisations- und Pfropfprozesse, Vernetzung- oder Kopplungsmittel verwendet werden können.

Diese Aufgabe wird hinsichtlich der Verwendung eines Copolymeren oder Polymeren als Flammschutzmittel für Kunststoffe, Stabilisatoren für Kunststoffe, Rheologiemodifikatoren für Kunststoffe, Initiatoren für Polymerisations- und Pfropfprozesse und/oder Vernetzungs- oder Kopplungsmittel gemäß den Merkmalen des Patentanspruchs 1 und bezüglich eine Kunststoffformmasse mit den Merkmalen des Patentanspruchs 7 gelöst. Dabei stellen die jeweilig abhängigen Patentansprüche vorteilhafte Weiterbildungen dar.

Erfindungsgemäß wird somit die Verwendung eines Copolymeren oder Polymeren als Flammschutzmittel für Kunststoffe, Stabilisator für Kunststoffe, Rheologie-modifikator für Kunststoffe, Initiator für Polymerisations- und Pfropfprozesse und/oder Vernetzungs- oder Kopplungsmittel angegeben. Das erfindungsgemäß verwendete Copolymere oder Polymere enthält mindestens eines der nachfolgend abgebildeten Strukturelemente
a) 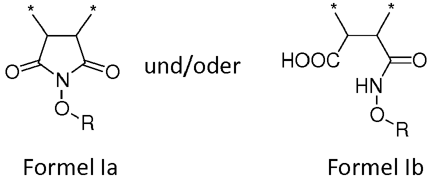 und/oder
b) 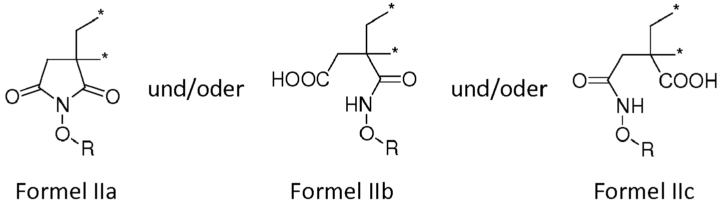 und/oder
c) 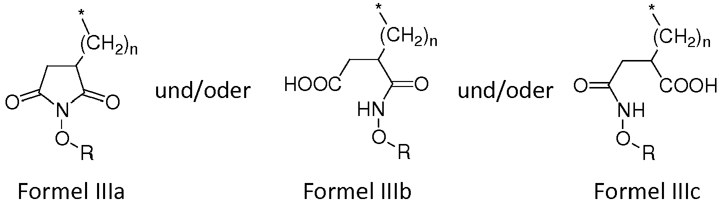 und/oder 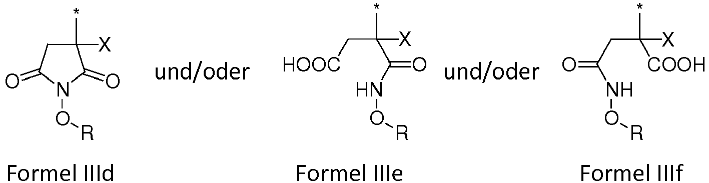
wobei jeweils unabhängig voneinander
- R: einen ggf. substituierten Alkylrest mit 1 bis 18 Kohlenstoffatomen, einen ggf. substituierten Cycloalkylrest mit 6 bis 22 Kohlenstoffatomen, einen ggf. substituierten Arylrest mit 6 bis 36 Kohlenstoffatomen oder einen ggf. substituierten Acylrest mit 2 bis 18 Kohlenstoffatomen,
- *: eine Anknüpfungsstelle zum Polymer,
- n: 0 oder 1, und
- X: Methyl
bedeuten.
Es wurde erkannt, dass die erfindungsgemäß verwendeten Polymere gute Wirksamkeit aufweisen um Kunststoffe flammhemmend auszustatten, um Kunststoffe zu stabilisieren, um die rheologischen Eigenschaften von Kunststoffen zu modifizieren und/oder um Polymerisations- und Pfropfprozesse zu initiieren. Aufgrund ihrer polymeren Struktur weisen die erfindungsgemäß verwendeten Polymere gegenüber heutzutage auf diesen Anwendungsgebieten verwendeten niedermolekularen Kunststoffadditiven vorteilhafte Eigenschaften wie z.B. niedriges Migrationsverhalten, niedrige oder keine Toxizität und eine hohe Langzeitstabilität auf.
Die erfindungsgemäß verwendeten Copolymere oder Polymere enthalten zumindest ein Strukturelement der Gruppen a), b) oder c).
Bei den Strukturelementen der Gruppe a) handelt es sich um Oxyimide auf Basis von Maleinsäureanhydrid (Formel Ia) bzw. um Oxyamide auf Basis von Maleinsäure (Formel Ib), wobei diese Strukturelemente Teil der Hauptkette des Copolymers bzw. Polymers sind.
Bei den Strukturelementen der Gruppe b) handelt es sich um Oxyimide auf Basis von Itaconsäureanhydrid (Formel IIa) bzw. um Oxyamide auf Basis von Itaconsäure (Formel IIb), wobei diese Strukturelemente Teil der Hauptkette des Copolymers bzw. Polymers sind.
Bei den Strukturelementen der Gruppe c) handelt es sich schließlich um Oxyimide auf Basis von Maleinsäureanhydrid oder Itaconsäureanhydrid bzw. um Oxyamide auf Basis von Maleinsäure bzw. Itaconsäure, wobei diese Strukturlemente nicht Teil der Hauptkette des Copolymers bzw. Polymers sind, sondern an die Hauptkette des Copolymers bzw. Polymers aufgepfropft sind. Bei dem auf diese Weise entstehenden Copolymer oder Polymer handelt es sich also um ein Pfropfcopolymer oder Pfropfpolymer. Bei den Strukturelementen gemäß Formel IIId sowie für den Fall n = 1 auch bei den Strukturelementen gemäß Formel IIIa handelt es sich um Oxyimide auf Basis von Itaconsäureanhdrid. Für den Fall n = 0 handelt es sich bei dem Strukturelementen gemäß Formel IIIa um Oxyimide auf Basis von Maleinsäureanhydrid. Bei den Strukturelementen gemäß der Formeln IIIe und IIIf sowie für den Fall n = 1 auch bei den Strukturelementen gemäß der Formeln IIIb und IIIc handelt es sich um Oxyamide auf Basis von Itaconsäure. Für den Fall n = 0 handelt es sich bei den Strukturelementen gemäß der Formeln IIIb und IIIc um Oxyamide auf Basis von Maleinsäure.

Die Strukturelemente der Gruppen a), b) und c) können als Oxyimide in Ringform (Formel Ia, IIa, IIIa und IIId) und/oder als Oxyamide in offenkettiger Form (Formel Ib, IIb, IIc, IIIb, IIIc, IIIe und IIIf) vorliegen. Die Ringform und die offenkettige Form stehen dabei formal miteinander in einem Gleichgewicht, wobei sich die offenkettige Form durch eine Kondensationsreaktion in die Ringform umwandeln und die Ringform formal durch eine Hydrolysereaktion zur offenkettigen Form reagieren kann. Dieses Gleichgewicht liegt in der Regel nahezu vollständig auf der Seite des Oxyimides bzw. der Ringform. Das Oxyimid bzw. die Ringform weist also eine deutlich höhere thermodynamische Stabilität als das Oxyamid bzw. die offenkettige Form auf.
Bei den Polymeren bzw. Copolymeren, die die Strukturelemente a) und/oder b) umfassen, kann es sich um von Homopolymerisaten von Maleinsäureanhydrid bzw. Itaconsäureanhydrid abgeleitete Oxyimide bzw. Oxyamide handeln. Bevorzugt stellen diese Polymerisate jedoch Copolymerisate dar, bei denen mindestens ein radikalisch polymerisierbares Monomer mit Maleinsäureanhydrid und/oder Itaconsäureanhydrid copolymerisiert und aunschließend zum entsprechenden Oxyimid umgesetzt wurde.
Gemäß einer bevorzugten Ausführungsform der vorliegenden Erfindung sind
a) die Copolymeren oder Polymeren gemäß Merkmal a) durch Umsetzung von Maleinsäureanhydrid enthaltenden Copolymeren oder Polymeren
b) die Copolymeren oder Polymeren gemäß Merkmal b) durch Umsetzung von Itaconsäureanhydrid enthaltenden Copolymeren oder Polymeren
c) die Copolymeren oder Polymeren gemäß Merkmal c) im Fall von n = 0 durch Umsetzung von Maleinsäureanhydrid gepfropften Polymeren oder Copolymeren, im Fall von n = 1 durch Umsetzung von Itaconsäureanhydrid gepfropften Polymeren oder Copolymeren
mit einer Aminverbindung gemäß der allgemeinen Formel IV

H₂N-O-R Formel IV

wobei R wie zuvor definiert ist, erhältlich. Diese Aminverbindung wird dabei bezüglich der Maleinsäureanhydrid- bzw. Itaconsäureanhydrid-Funktionalitäten insbesondere in stöchiometrischem Überschuss eingesetzt, so dass gewährleistet ist, dass ein möglichst großer Anteil der enthaltenen Maleinsäureanhydrid- bzw. Itaconsäureanhydrid-Funktionalitäten umgesetzt wird.

Weiterhin ist bevorzugt, dass das erfindungsgemäß verwendete Polymere das Produkt der Umsetzung eines Copolymers aus Ethylen und Maleinsäureanhydrid gemäß der allgemeinen Formel V 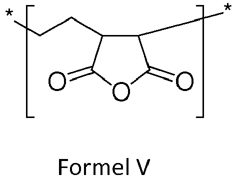 mit einer Aminverbindung gemäß der allgemeinen Formel IV ist. Eine derartige Umsetzung wird z.B. in J. Am. Chem. Soc. 1968, 90, 2696-2698 beschrieben. Alternierende Copolymere aus Ethylen und Maleinsäureanhydrid gemäß der allgemeinen Formel V sind kommerziell erhältlich, wobei ihre Herstellung beispielsweise in DD 268 249 A1 und CA 819181 beschrieben ist. Ein kommerzielles Produkt ist beispielsweise von der Fa. Vertellus unter der Bezeichnung ZeMac (RTD) im Handel. Pfropf-Copolymere von Maleinsäureanhydrid auf der Basis von Polyethylen oder Polypropylen sind beispielsweise unter der Bezeichnung Scona von BYK-Chemie, unter der Bezeichnung Exxelor VA von Exxon-Mobil oder unter der Bezeichnung Polybond von der Fa. Addivant erhältlich. Polystyrol-ethylen/butylen-graft-maleinsäureanhydrid-polystyrol-Blockcopolymere sind unter der Bezeichnung Kraton von Kraton Polymers im Handel.

Eine weitere bevorzugte Ausführungsform sieht vor, dass
a) die Maleinsäureanhydrid-copolymeren ausgewählt sind aus der Gruppe bestehend aus Poly-maleinsäureanhydrid-co-alkylenen, insbesondere Poly-maleinsäureanhydrid-co-ethylen, Poly-maleinsäureanhydrid-copropylen, Poly-maleinsäureanhydrid-co-butylen, Poly-maleinsäureanhydrid-co-hexen, Poly-maleinsäureanhydrid-co-octen, Poly-maleinsäureanhydrid-co-octadecen, Poly-maleinsäureanhydrid-co-butadien, Poly-maleinsäureanhydrid-co-vinylacetat, Poly-maleinsäureanhydrid-co-styrol, Poly-maleinsäureanhydrid-co-vinylmethylether, Poly-maleinsäureanhydrid-co-vinylchlorid, Poly-maleinsäureanhydrid-co-methyl-(meth)acrylat, Poly-maleinsäureanhydrid-co-vinylalkyleether, insbesondere Poly-maleinsäureanhydrid-co-vinylethylether, Poly-maleinsäureanhydrid-co-vinylbutylether, Poly-maleinsäureanhydrid-co-vinylpyrrolidon, Poly-maleinsäureanhydrid-co-acrylnitril, sowie entsprechende Terpolymere und Blends oder Mischungen der zuvor genannten Copolymere,
b) die Itaconsäureanhydrid-copolymeren ausgewählt sind aus der Gruppe bestehend aus Poly-itaconsäureanhydrid-co-alkylenen, insbesondere Poly-itaconsäureanhydrid-co-ethylen, Poly-itaconsäureanhydrid-copropylen, Poly-itaconsäureanhydrid-co-butylen, Poly-itaconsäureanhydrid-co-hexen, Poly-itaconsäureanhydrid-co-octen, Poly-itaconsäureanhydrid-co-octadecen, Poly-itaconsäureanhydrid-co-butadien, Poly-itaconsäureanhydrid-co-vinylacetat, Poly-itaconsäureanhydrid-co-styrol, Poly-itaconsäureanhydrid-co-vinylmethylether, Poly-itaconsäureanhydrid-co-vinylchlorid, Poly-itaconsäureanhydrid-co-methyl-(meth)acrylat, Poly-itaconsäureanhydrid-co-vinylalkyleether, insbesondere Poly-itaconsäureanhydrid-co-vinylethylether, Poly-itaconsäureanhydrid-co-vinylbutylether, Poly-itaconsäureanhydrid-co-vinylpyrrolidon, Poly-itaconsäureanhydrid-co-acrylnitril, sowie entsprechende Terpolymere und Blends oder Mischungen der zuvor genannten Copolymere,
c) die Maleinsäureanhydrid gepfropften Polymeren oder Copolymeren ausgewählt sind aus der Gruppe bestehend aus Polyethylen-graft-maleinsäureanhydrid, Polypropylen-graft-maleinsäureanhydrid, Polystyrol-graft-maleinsäureanhydrid, Polystyrol-Butadien-graft-maleinsäureanhydrid-styrol, Polystyrol-butylen/ethylen-graft-maleinsäureanhydrid-styrol, und/oder
   die Itaconsäureanhydrid gepfropften Polymeren oder Copolymeren ausgewählt sind aus der Gruppe bestehend aus Polyethylen-graft-itaconsäureanhydrid, Polypropylen-graft-itaconsäureanhydrid, Polystyrol-graft-itaconsäureanhydrid, Polystyrol-Butadien-graft-itaconsäureanhydrid-styrol, Polystyrol-butylen/ethylen-graft-itaconsäureanhydrid-styrol
   sowie Blends oder Mischungen aus den zuvor genannten Pfropfpolymeren.

Weiterhin ist bevorzugt, dass
a) der Gesamtgehalt der Strukturelemente Ia und Ib im Copolymeren von 0,1 bis 99 mol-%, bevorzugt 20 bis 80 mol-%,
b) der Gesamtgehalt der Strukturelemente IIa , IIb und IIc im Copolymeren von 0,1 bis 99 mol-%, bevorzugt 20 bis 80 mol-%,
c) der Gesamtgehalt der Strukturelemente IIIa, IIIb und IIIc im Pfropfcopolymeren oder Propfpolymeren von 0,1 bis 50 Gew.-%, bevorzugt von 0,5 bis 10 Gew.-% beträgt.

In einer weiteren bevorzugten Ausführungsform ist der Kunststoff ausgewählt aus der Gruppe bestehend aus thermoplastischen, elastomeren oder duroplastischen Kunststoffen:
a) Polymere aus Olefinen oder Diolefinen wie z.B. Polyethylen (LDPE, LLDPE, VLDPE, ULDPE, MDPE, HDPE, UHMWPE), Metallocen-PE (m-PE), Polypropylen, Polyisobutylen, Poly-4-methyl-penten-1, Polybutadien, Polyisopren, Polycycloocten, Polyalkylen-Kohlenmonoxid-Copolymere, sowie Copolymere in Form von statistischen oder Blockstrukturen wie z.B. Polypropylen-Polyethylen (EP), EPM oder EPDM, Ethylen-Vinylacetat (EVA), Ethylen-Acrylester, wie z.B. Ethylen-Butylacrylat, Ethylen-Acrylsäure und deren Salze (lonomere), sowie Terpolymere wie z.B. Ethylen-Acrylsäure-Glycidylacrylat, Pfropfpolymere wie z.B. Polypropylen-g-Maleinsäureanhydrid, Polypropylen-g-Acrylsäure, Polyethylen-g-Acrylsäure,
b) Polystyrol, Polymethylstyrol, Polyvinylnaphthalin, Styrol-Butadien (SB), Styrol-Butadien-Styrol (SBS), Styrol-Ethylen-Butylen-Styrol (SEBS), Styrol-Ethylen-Propylen-Styrol, Styrolisopren, Styrol-Isopren-Styrol (SIS), Styrol-butadien-acrylnitril (ABS), Styrol-acrylnitril-acrylat (ASA), Styrol-Ethylen, Styrol-Maleinsäureanhydrid-Polymere einschl. entsprechender Pfropfcopolymere wie z.B. Styrol auf Butadien, Maleinsäureanhydrid auf SBS oder SEBS, sowie Pfropfcopolymere aus Methylmethacrylat, Styrol-Butadien und ABS (MABS),
c) halogenenthaltende Polymere wie z.B. Polyvinylchlorid (PVC), Polychloropren und Polyvinylidenchlorid (PVDC), Copolymere aus Vinylchlorid und Vinylidenchlorid oder aus Vinylchlorid und Vinylacetat, chloriertes Polyethylen, Polyvinylidenfluorid,
d) Polymere von ungesättigten Estern wie z.B. Polyacrylate und Polymethacrylate wie Polymethylmethacrylat (PMMA), Polybutylacrylat, Polylaurylacrylat, Polystearylacrylat, Polyacrylnitril, Polyacrylamide, Copolymere wie z.B. Polyacrylnitril-Polyalkylacrylat,
e) Polymere aus ungesättigten Alkoholen und Derivaten, wie z.B. Polyvinylalkohol, Polyvinylacetat, Polyvinylbutyral,
f) Polyacetale, wie z.B. Polyoxymethylen POM) oder Copolymere mit z.B. Butanal,
g) Polyphenylenoxide und Blends mit Polystyrol oder Polyamiden,
h) Polymere von cyclischen Ethern wie z.B. Polyethylenglycol, Polypropylenglycol, Polyethylenoxid, Polypropylenoxid,
i) Polyurethane, aus hydroxyterminierten Polyethern oder Polyestern und aromatischen oder aliphatischen Isocyanaten insbesondere lineare Polyurethane, Polyharnstoffe,
j) Polyamide wie z.B. Polyamid-6, 6.6, 6.10, 4.6, 4.10, 6.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen oder aus aliphatischen Dicarbonsäuren wie z.B. Adipinsäure oder Sebazinsäure und aromatischen Diaminen wie z.B. 1,4- oder 1,3-Diaminobenzol,
k) Polyimide, Polyamid-imide, Polyetherimide, Polyesterimide, Poly(ether)ketone, Polysulfone, Polyethersulfone, Polyarylsulfone, Polyphenylensulfid, Polybenzimidazole, Polyhydantoine,
l) Polyester aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat, Polyethylennaphthylat, Poly-1,4-dimethylolcyclohexanterephthalat, Polyhydroxybenzoat, Polyhydroxynaphthalat, Polymilchsäure,
m) Polycarbonate, Polyestercarbonate, sowie Blends wie z.B. PC/ABS, PC/PBT, PC/PET/PBT,
n) Cellulosederivate wie z.B. Cellulosenitrat, Celluloseacetat, Cellulosepropionat, Cellulosebutyrat
o) sowie Mischungen, Kombinationen oder Blends aus zwei oder mehr der zuvor genannten Polymere.

Sofern es sich bei den unter a) bis o) angegebenen Polymeren um Copolymere handelt, können diese in Form von statistischen ("random"), Block- oder "tapered" Strukturen vorliegen.

Sofern es sich bei den unter a) bis o) angegebenen Polymeren um stereoreguläre Polymere handelt, können diese in Form von isotaktischen, stereotaktischen, aber auch ataktischen Formen vorliegen.

Weiterhin können die unter a) bis o) angegebenen Polymere sowohl amorphe als auch (teil-)kristalline Morphologien aufweisen.

Ggf. können die unter a) genannten Polyolefine auch vernetzt vorliegen, z.B. vernetztes Polyethylen, das dann als X-PE bezeichnet wird. Die unter a) genannten Polyolefine können beliebige Stereostrukturen aufweisen, d.h. isotaktisch, syndiotaktisch oder ataktisch oder in Stereoblockstrukturen vorliegen.

Darüber hinaus kann der Kunststoff auch ausgewählt sein aus der Gruppe bestehend aus den folgenden duromeren, nicht-thermoplastischen Kunststoffen:
p) Epoxidharze, bestehend aus di- oder polyfunktionellen Epoxidverbindungen in Kombination mit z.B. aminischen, anhydridischen oder katalytisch wirkenden Härtern,
q) Phenolharze wie z.B. Phenol-Formaldehyd-Harze, Harnstoff-Formaldehyd-Harze, Melamin-Formaldehydharze,
r) ungesättigte Polyesterharze,
s) Silikone,
t) Polyurethane als Reaktionsprodukte aus di- oder polyfunktionellen Isocyanaten und Polyolen, Polyharnstoffe,
u) Alkydharze, Allylharze.

Insbesondere ist der Kunststoff ausgewählt aus der Gruppe bestehend aus
a) Polymere aus Olefinen oder Diolefinen wie z.B. Polyethylen (LDPE, LLDPE, VLDPE, MDPE, HDPE), Polypropylen, Polyisobutylen, Poly-4-methylpenten-I, Polybutadien, Polyisopren, Polycycloocten, sowie Copolymere in Form von statistischen oder Blockstrukturen wie z.B. Polypropylen-Polyethylen (EP), EPM oder EPDM, Ethylen-Vinylacetat (EVA), Ethylen-Acrylester,
b) Polystyrol, Polymethylstyrol, Styrol-Butadien, Styrol-Butadien-Styrol (SBS), Styrolisopren, Styrol-Butadien-Acrylnitril (ABS), Styrol-Acrylnitril-Acrylat (ASA), Styrol-Maleinsäureanhydrid-Polymere einschließlich entsprechender Pfropfcopolymere, wie z.B. Styrol auf Butadien oder Maleinsäureanhydrid auf SBS,
c) Halogenenthaltende Polymere, wie z.B. Polyvinylchlorid und Polyvinylidenchlorid,
d) Polymere von ungesättigten Estern wie z.B. Polyacrylate und Polymethacrylate wie PMMA, Polyacrylnitril,
e) Polymere aus ungesättigten Alkoholen und Derivaten, wie z.B. Polyvinylalkohol, Polyvinylacetat. Polyvinylbutyral,
f) Polyacetale, wie z.B. Polyoxymethylen,
g) Polyphenylenoxide und Blends mit Polystyrol,
h) Polyurethane, insbesondere lineare Polyurethane,
i) Polyamide, wie z.B. Polyamid-6, 6.6., 6.10. 4.6, 4.10, 6.12,12.12., Polyamid 11, Polyamid 12 sowie (teil-)aromatische Polyamide wie z.B. Polyphthalamide,
j) Polyimide, Polyamidimide, Polyetherimide, Polyketone, Polysulfone, Polyethersulfone, Polyphenylensulfid,
k) Polyester, wie z.B. Polyethylenterephthalat und Polybutylenterephthalat, Polymilchsäure,
l) Polycarbonat,
m) Cellulosederivate, wie z.B. Cellulosenitrat, Celluloseacetat, Cellulosepropionat,
n) sowie Mischungen, Kombinationen oder Blends aus zwei oder mehr der zuvor genannten Polymeren.

Eine weitere bevorzugte Variante der Erfindung sieht vor, dass das Copolymere oder Polymere dem Kunststoff zugemischt wird. Der Gesamtgehalt des Copolymeren oder Polymeren im entstehenden Gemisch beträgt dabei insbesondere 0,01 bis 50 Gew.-%, bevorzugt 0,05 bis 25 Gew.-%.

Die vorliegende Erfindung betrifft außerdem eine Kunststoffformmasse, enthaltend mindestens ein Copolymer oder Polymer sowie mindestens einen Kunststoff. Das Copolymer oder Polymer enthält dabei mindestens eine der nachfolgend abgebildeten Strukturelemente
a) 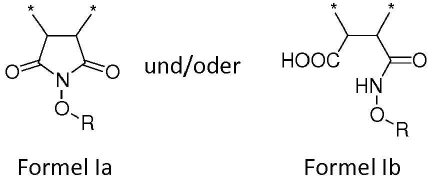 und/oder
b) 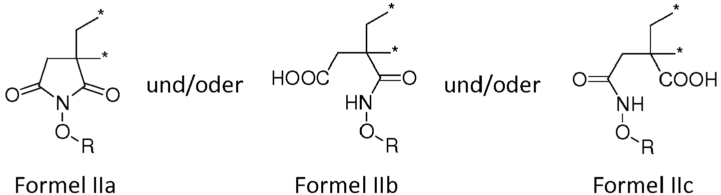 und/oder
c) 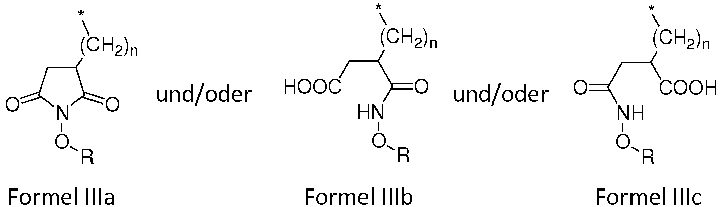 und/oder 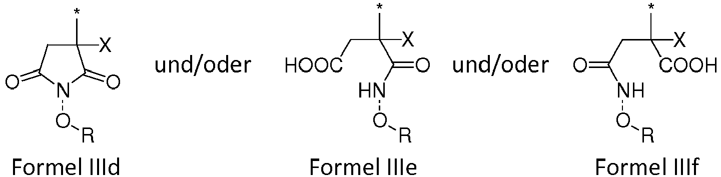
wobei jeweils unabhängig voneinander
- R: einen ggf. substituierten Alkylrest mit 1 bis 18 Kohlenstoffatomen, einen ggf. substituierten Cycloalkylrest mit 6 bis 22 Kohlenstoffatomen, einen ggf. substituierten Arylrest mit 6 bis 36 Kohlenstoffatomen oder einen ggf. substituierten Acylrest mit 2 bis 18 Kohlenstoffatomen,
- *: eine Anknüpfungsstelle zum Polymer,
- n: 0 oder 1
- X: Methyl
bedeuten,
wobei der Gesamtgehalt des Copolymeren oder Polymeren in der Kunstoffformmasse 0,01 bis 50 Gew.-% beträgt. In einer bevorzugten Variante der erfindungsgemäßen Kunststoffformmasse beträgt der Gesamtgehalt des Copolymeren oder Polymeren in der Kunststoffformmasse 0,05 bis 25 Gew.-%.
Weiterhin ist bevorzugt, dass die Kunststoffformmasse neben dem mindestens einen Copolymeren oder Polymeren und dem mindestens einen Kunststoff zusätzlich bis zu 70 Gew.-Teile, bevorzugt bis zu 25 Gew.-Teile, bezogen auf die Gesamtheit des mindestens einen Copolmyeren oder Polymeren und des mindestens einen Kunststoffs, mindestens ein Flammschutzmittel, ausgewählt aus der Gruppe bestehend aus phosphorhaltigen, stickstoffhaltigen, anorganischen, siliciumhaltigen, borhaltigen, halogenhaltigen, schwefelhaltigen und/oder radikalbildenden Flammschutzmitteln enthält.
Dabei ist das Flammschutzmittel bevorzugt ausgewählt aus der Gruppe bestehend aus
a) anorganischen Flammschutzmitteln wie z.B. Al(OH)₃, Mg(OH)₂, AIO(OH), Schichtsilikate wie z.B. Montmorillonit, nicht oder organisch modifiziert, Doppelsalze, wie z.B. Mg-Al-Silikate, POSS-Verbindungen,
b) Stickstoffhaltigen Flammschutzmitteln wie z.B. Melamin, Melem, Melam, Melon, Melaminderivate, Polyisocyanurate, Melaminkondensationsprodukte Allantoin, Phosphacene insbesondere Melaminsalze, Benzoguanamin, Melamincyanurat, Melaminphosphat, Melaminpyrophosphat, Dimelaminphosphat, Melaminpolyphosphat, Ammoniumpolyphosphat, Melaminborat, Melaminhydrobromid,
c) Phosphorhaltigen Flammschutzmitteln wie z.B. roter Phosphor, Phosphate wie z.B. Resorcindiphosphat, Bisphenol-A-diphosphat und ihre Oligomere, Triphenylphosphat, Phosphinate wie z.B. Salze der hypophosphorigen Säure und Ihrer Derivate wie Diethylaluminiumphosphinat oder Aluminiumphosphinat, Phosphonatester, oligomere und polymere Derivate der Methanphosphonsäure, 9,10-Dihydro-9-oxa-10-phosphorylphenanthren-10-oxid (DOPO) und deren substituierte Verbindungen,
d) Halogenhaltigen Flammschutzmitteln auf Chlor- und Brombasis, wie z.B. polybrominierte Diphenyloxide, Tris(3-bromo-2,2-bis(brommethyl)propylphosphat, Ethylenbis(tetrabromphthalimid), Tetrabrom-bisphenol A, bromiertes Polystyrol, bromiertes Polybutadien,
e) Schwefelhaltigen Flammschutzmitteln, wie z.B. elementarer Schwefel, Disulfide und Polysulfide, Thiuramsulfid, Dithiocarbamate, Mercaptobenzthiazol und Sulfenamide,
f) Boraten, wie z.B. Zinkborat oder Calciumborat,
g) Antidrip-Mitteln, wie z.B. Polytetrafluorethylen,
h) Siliciumhaltigen Verbindungen, wie z.B. Polyphenylsiloxane,
i) Radikalbildenden Substanzen, wie z.B. Alkoxyamine, Hydroxylaminester, Azoverbindungen, Dicumyl oder Polycumyl.

Weiterhin ist bevorzugt, dass die erfindungsgemäße Kunststoffformmasse Zusatzstoffe enthält, die ausgewählt sind aus der Gruppe bestehend aus UV-Absorbern, Lichtstabilisatoren, Stabilisatoren, wie der Benzofuranone, Metalldesaktivatoren, Füllstoffdesaktivatoren, Füllstoffen, Verstärkungsstoffen, Nukleierungsmitteln, Schlagzähigkeitsverbesserern, Weichmachern, Gleitmitteln, Rheologie-modifikatoren, Verarbeitungshilfsmitteln, Pigmenten, Farbstoffen, optische Aufhellern, antimikrobielle Wirkstoffen, Antistatika, Slipmitteln, Antiblockmitteln, Kopplungsmitteln, Dispergiermitteln, Kompatibilisatoren, Sauerstofffängern, Säurefängern, Markierungsmitteln oder Antifoggingmitteln.

In einer weiteren bevorzugten Ausführungsform enthalten die Zusammensetzungen insbesondere Säurefänger, z.B. auf Basis von Salzen langkettiger Säuren wie z.B. Calciumstearat, Magnesiumstearat, Zinkstearat, Aluminiumstearat, Calciumlactat, Calciumstearoyl-2-lactylate oder von Hydrotalciten.

Geeignete Lichtstabilisatoren sind beispielsweise Verbindungen auf der Basis von 2-(2'-Hydroxyphenyl)benzotriazolen, 2-Hydroxybenzophenonen, Estern von Benzoesäuren, Acrylaten, Oxamiden und 2-(2-Hydroxyphenyl)-1,3,5-Triazinen.

Geeignete 2-(2'-Hydroxyphenyl)benzotriazole sind beispielsweise 2-(2'-Hydroxy-5'methylphenyl)benzotriazol, 2-(3',5'-Di-*tert*-butyl-2'-hydroxyphenyl)benzotriazol, 2-(5'-*tert*-Butyl-2'-hydroxy-phenyl)benzotriazol, 2-(2'-Hydroxy-5'-(1,1,3,3-tetramethylbutyl)phenyl)benzotriazol, 2-(3',5'-Di-*tert*-butyl-2'-hydroxyphenyl)-5-chlorobenzotriazol, 2-(3'-*tert*-Butyl-2'-hydroxy-5'-methylphenyl-5-chlorobenzotriazol, 2-(3'-*sec*-Butyl-5'-*tert*-butyl-2'-hydroxyphenyl)benzotriazol, 2-(2'-Hydroxy-4'-octyloxyphenyl)benzotriazol, 2-(3',5'-Di-*tert*-amyl-2'-hydroxyphenyl)benzotriazol, 2-(3',5'-Bis(α,α-dimethylbenzyl)-2'-hydroxyphenyl)benzotriazol, 2-(3'-*tert*-Butyl-2'-hydroxy-5'-(2-octyloxycarbonylethyl)phenyl)-5-chlorobenzotriazol, 2-(3'-*tert*-Butyl-5'-[2-(2-ethylhexyloxy)carbonylethyl]-2'-hydroxyphenyl)-5-chlorobenzotriazol, 2-(3'-*tert*-Butyl-2'-hydroxy-5'-(2-methoxycarbonylethyl)phenyl)-5-chlorobenzotriazol, 2-(3'-*tert*-Butyl-2'-hydroxy-5'-(2-methoxycarbonylethyl)phenyl)benzotriazol, 2-(3'-*tert*-Butyl-2'-hydroxy-5'-(2-octyloxycarbonylethyl)phenyl)benzotriazol, 2-(3'-*tert*-Butyl-5'-[2-(2-ethylhexyloxy)carbonylethyl]-2'-hydroxyphenyl)benzotriazol, 2-(3'-Dodecyl-2'-hydroxy-5'-methylphenyl)benzotriazol, 2-(3'-*tert*-Butyl-2'-hydroxy-5'-(2-isooctyloxycarbonylethyl)phenylbenzotriazol, 2,2'-Methylenbis[4-(1,1,3,3-tetramethylbutyl)-6-benzotriazol-2-ylphenol]; das Produkt der Umesterung von 2-[3'-*tert*-Butyl-5'-(2-methoxycarbonylethyl)-2'-hydroxyphenyl]-2H-benzotriazol mit Polyethylenglycol 300; [R-CH₂CH₂-COO-CH₂CH₂-]-₂, wobei R = 3'-*tert*-Butyl-4'-hydroxy-5'-2H-benzotriazol-2-ylphenyl, 2-[2'-Hydroxy-3'-(α,α-dimethylbenzyl)-5'-(1,1,3,3-tetramethylbutyl)phenyl]benzotriazol, 2-[2'-hydroxy-3'-(1,1,3,3-tetramethylbutyl)-5'-(α,α-dimethylbenzyl)phenyl]benzotriazol Geeignete 2-Hydroxybenzophenone sind beispielsweise 4-Hydroxy-, 4-Methoxy-, 4-Octyloxy-, 4-Decyloxy- 4-Dodecyloxy, 4-Benzyloxy, 4,2',4'-Trihydroxy- und 2'-Hydroxy-4,4'-dimethyoxy-Derivate der 2-Hydroxybenzophenone.

Geeignete Acrylate sind beispielsweise Ethyl-α-cyano-β,β-diphenylacrylat, Isooctyl-α-cyano-β,β-diphenylacrylat, Methyl-α-carbomethoxycinnamat, Methyl-α-cyano-β-methyl-p-methoxycinnamat, Butyl-α-cyano-β-methyl-p-methoxycinnamat, Methyl-α-carbomethoxy-p-methoxycinnamat und N-(β-carbomethoxy-β-cyanovinyl)-2-methylindolin.

Geeignete Ester von Benzoesäuren sind beispielsweise 4-*tert-*Butylphenylsalicylat, Phenylsalicylat, Octylphenylsalicylat, Dibenzoylresorcinol, Bis(4-*tert*-butylbenzoyl)resorcinol, Benzoylresorcinol, 2,4-Di-*tert*-butylphenyl-3,5-di-*tert*-butyl-4-hydroxybenzoat, Hexadecyl-3,5-di-*tert*-butyl-4-hydroxybenzoat, Octadecyl-3,5-di-*tert*-butyl-4-hydroxybenzoat, 2-Methyl-4,6-di-*tert*-butylphenyl-3,5-di-*tert*-butyl-4-hydroxybenzoat.

Geeignete Oxamide sind beispielsweise 4,4'-Dioctyloxyoxanilid, 2,2'-diethoxyoxanilid, 2,2'-Dioctyloxy-5,5'-di-*tert*-butoxanilid, 2,2'-didodecyloxy-5,5'-di-*tert*-butoxanilid, 2-Ethoxy-2'-ethyloxanilid, N,N'-Bis(3-dimethylaminopropyl)oxamid, 2-Ethoxy-5-*tert*-butyl-2'-ethoxanilid und seine Mischungen mit 2-Ethoxy-2'-ethyl-5,4'-di-*tert*-butoxanilid, Mischungen von o- und p-Methoxy-disubstituierten Oxaniliden und Mischungen von o- und p-Ethoxy-disubstituierten Oxaniliden.

Geeignete 2-(2-Hydroxyphenyl)-1,3,5-Triazine sind beispielsweise 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxypropoxy)-phenyl]-4,6-bis(2,4-dimethyl)-1,3,5-triazin, 2-[2-Hydroxy-4-(2-hydroxy-3-octyloxypropyloxy)phenyl]-4,6-bis(2,4-dimethyl)-1,3,5-triazin, 2-[4-(Dodecyloxy/Tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxypropoxy)phenyl]-4,6-bis(2,4-dimethylphenyl-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxypropoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl-1,3,5-triazin.

Geeignete Metalldesaktivatoren sind beispielsweise N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoylbisphenylhydrazid, N,N'-Diacetyladipoyldihydrazid, N,N'-Bis(salicyloyl)oxylyldihydrazid, N,N'-Bis(salicyloyl)thiopropionyldihydrazid.

Insbesondere als Metalldesaktivatoren geeignet sind die folgenden Strukturen:

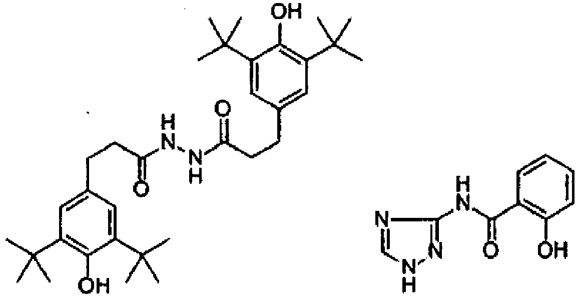

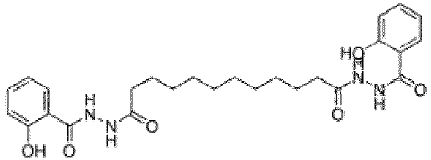

Geeignete Stabilisatoren sind phenolische Antioxidantien. Geeignete phenolische Antioxidantien sind beispielsweise:
Alkylierte Monophenole, wie z.B. 2,6-Di-*tert*-butyl-4-methylphenol, 2-*tert-*Butyl-4,6-dimethylphenol, 2,6-Di-*tert*-butyl-4-ethylphenol, 2,6-Di-*tert*-butyl-4-n-butylphenol, 2,6-Di-*tert*-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-*tert*-butyl-4-methoxymethylphenol, lineare oder verzweigte Nonylphenole, wie z.B. 2,6-Dinonyl-4-methylphenol, 2,4-Dimethyl-6-(1'-methylundec-1'-yl)phenol, 2,4-Dimethyl-6-(1'-methylheptadec-l'-yl)phenol, 2,4-Dimethyl-6-(1'-methyltridec-1'-yl)phenol und Mischungen hiervon;
Alkylthiomethylphenole, wie z.B. 2,4-Dioctylthiomethyl-6-*tert*-butylphenol, 2,4-Dioctylthiomethyl-6-methylphenol, 2,4-Dioctylthiomethyl-6-ethylphenol, 2,6-Didodecylthiomethyl-4-nonylphenol;
Hydrochinone und alkylierte Hydrochinone, wie z.B. 2,6-Di-*tert*-butyl-4-methyoxyphenol, 2,5-Di-*tert*-butylhydrochinon, 2,5-Di-*tert*-amylhydrochinon, 2,6-Diphenyl-4-octadecyloxyphenol, 2,6-Di-*tert*-butylhydrochinon, 2,5-Di-*tert-*butyl-4-hydroxyanisol, 3,5-Di-*tert*-butyl-4-hydroxyanisol, 3,5-Di-*tert*-butyl-4-hydroxyphenylstearat, Bis(3,5-di-*tert*-butyl-4-hydroxylphenyl)adipat;
Tocopherole, wie z.B. α-, β-, γ-, δ-Tocopherol und Mischungen aus diesen (Vitamin E);
Hydroxylierte Thiodiphenylether, wie z.B. 2,2'-Thiobis(6-*tert*-butyl-4-methylphenol), 2,2'-Thiobis(4-octylphenol), 4,4'-Thiobis(6-*tert*-butyl-3-methylphenol), 4,4'-Thiobis(6-*tert*-butyl-2-methylphenol), 4,4'-Thiobis(3,6-di-*sec*-amylphenol), 4,4'-Bis(2,6-dimethyl-4-hydroxyphenyl)disulfid;
Alkylidenbisphenole, wie z.B. 2,2'Methylenbis(6-*tert*-butyl-4-methylphenol), 2,2'-Methylenbis(6-*tert*-butyl-4-ethylphenol), 2,2'-Methylenbis[4-methyl-6-(α-methylcyclohexyl)phenol], 2,2'-Methylenbis(4-methyl-6-cyclhexylphenol), 2,2'-Methylenbis(6-nonyl-4-methylphenol), 2,2'-Methylenbis(4,6-di-*tert-*butylphenol), 2,2'-Ethylidenbis(4,6-di-*tert*-butylphenol), 2,2'-Ethylidenbis(6-*tert*-butyl-4-isobutylphenol), 2,2'-Methylenbis[6-(α-methylbenzyl)-4-nonylphenol], 2,2'-Methylenbis[6-(α,α-dimethylbenzyl)-4-nonylphenol], 4,4'-Methylenbis(2,6-di-*tert*-butylphenol, 4,4'-Methylenbis(6-*tert*-butyl-2-methylphenol), 1,1-bis(5-*tert*-butyl-4-hydroxy-2-methylphenyl)butan, 2,6-Bis(3-*tert*-butyl-5-methyl-2-hydroxybenzyl)-4-methylphenol, 1,1,3-Tris(5-tert-butyl-4-hydroxy-2-methylphenyl)butan, 1,1-bis(5-*tert*-butyl-4-hydroxy-2-methylphenyl)-3-n-dodecylmercaptobutan, Ethylenglycol-bis[3,3-bis(3'-*tert-*butyl-4'-hydroxyphenyl)butyrat], Bis(3-*tert*-butyl-4-hydroxy-5-methylphenyl)dicyclopentadien, Bis[2-(3'-*tert*-butyl-2'-hydroxy-5'-methylbenzyl)-6-*tert*-butyl-4-methylphenyl]terephthalat, 1,1-Bis-(3,5-dimethyl-2-hydroxyphenyl)butan, 2,2-Bis(3,5-di-*tert*-butyl-4-hydroxyphenyl)propan, 2,2-Bis-(5-*tert*-butyl-4-hydroxy-2-methylphenyl)-4-n-dodecylmercaptobutan, 1,1,5,5-Tetra(5-*tert*-butyl-4-hydroxy-2-methylphenyl)pentan;
O-, N- und S-Benzyl-Verbindungen, wie z.B. 3,5,3',5'-Tetra-*tert*-butyl-4,4'-dihydroxydibenzylether, Octadecyl-4-hydroxy-3,5-dimethylbenzylmercaptoacetat, Tridecyl-4-hydroxy-3,5-di-*tert-*butylbenzylmercaptoacetat, Tris(3,5-di-*tert*-butyl-4-hydroxybenzyl)amin, , Bis(4-*tert*-butyl-3-hydroxy-2,6-dimethylbenzyl)dithioterephthalat, Bis(3,5-di-*tert*-butyl-4-hydroxybenzyl)sulfid, Isooctyl-3,5-di-*tert*-butyl-4-hydroxybenzylmercaptoacetat;
Hydroxybenzylierte Malonate, wie z.B. Dioctadecyl-2,2-bis(3,5-di-*tert*-butyl-2-hydroxybenzyl)malonat, Dioctadecyl-2-(3-*tert*-butyl-4-hydroxy-5-methylbenzyl)malonat, Didodecylmercaptoethyl-2,2-bis(3,5-di-*tert*-butyl-4-hydroxybenzyl)malonat, Bis[4-(1,1,3,3-tetramethylbutyl)phenyl]-2,2-bis(3,5-di-*tert*-butyl-4-hydroxybenzyl)malonat;
Aromatische Hydroxybenzylverbindungen, wie z.B. 1,3,5-Tris(3,5-di-*tert*-butyl-4-hydroxybenzyl)-2,4,6-trimethylbenzol, 1,4-Bis(3,5-di-*tert*-butyl-4-hydroxybenzyl)-2,3,5,6-tetramethylbenzol, 2,4,6-Tris(3,5-di-*tert*-butyl-4-hydroxybenzyl)phenol;
Triazinverbindungen, wie z.B. 2,4-Bis(octylmercapto)-6-(3,5-di-*tert*-butyl-4-hydroxyanilino)-1,3,5-triazin, 2-Octylmercapto-4,6-bis(3,5-di-*tert*-butyl-4-hydroxyanilino)-1,3,5-triazin, 2-Octylmercapto-4,6-bis(3,5-di-*tert*-butyl-4-hydroxyphenoxy)-1,3,5-triazin, 2,4,6-Tris(3,5-di-*tert*-butyl-4-hydroxyphenoxy)-1,2,3-triazin, 1,3,5-Tris(3,5-di-*tert*-butyl-4-hydroxybenzyl)isocyanurat, 1,3,5-Tris(4-*tert*-butyl-3-hydroxy-2,6-dimethylbenzyl)isocyanurat, 2,4,6-Tris(3,5-di-tert-butyl-4-hydroxphenylethyl)-1,3,5-triazin, 1,3,5-Tris(3,5-di-*tert*-butyl-4-hydroyphenylpropionyl)hexahydro-1,3,5-triazin, 1,3,5-Tris(3,5-dicyclohexyl-4-hydroxybenzyl)isocyanurat;
Benzylphosphonate, wie z.B. Dimethyl-2,5-di-*tert*-butyl-4-hydroxybenzylphosphonat, Dietyhl-3,5-di-*tert*-butyl-4-hydroxybenzylphosphonat, Dioctadecyl-3,5-di-*tert*-butyl-4-hydroxybenzylphosphonat, Dioctadecyl-5-*tert*-butyl-4-hydroxy-3-methylbenzylphosphonat, das Calciumsalz des Monoethylesters der 3,5-Di-*tert*-butyl-4-hydroxybenzylphosphonsäure;
Acylaminophenole, wie z.B. 4-Hydroxylauranilid, 4-Hydroxystearanilid, Octyl-N-(3,5-di-*tert-*butyl-4-hydroxyphenyl)carbamat;
Ester der β-(3,5-Di-*tert*-butyl-4-hydroxyphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.
   Ester der β-(5-*tert*-Butyl-4-hydroxy-3-methylphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan, 3,9-Bis[2-{3-(3-*tert*-butyl-4-hydroxy-5-methylphenyl)propionyloxy}-1,1-dimethylethyl]-2,4,8,10-tetraoxaspiro[5.5]undecan;
Ester der β-(3,5-Dicyclohexyl-4-hydroxyphenyl)propionsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Ester der 3,5-Di-*tert*-butyl-4-hydroxyphenyl)essigsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Amide der β-(3,5-Di-*tert*-butyl-4-hydroxyphenyl)propionsäure, wie z.B. N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hydrazid, N,N'-Bis[2-(3-[3,5-di-*tert*-butyl-4-hydroxyphenyl]propionyloxy)ethyl]oxamid (Naugard®XL-1, vertrieben durch Uniroyal);
Ascorbinsäure (Vitamin C).

Besonders bevorzugte phenolische Antioxidantien sind:
Octadecyl-3-(3,5-di-*tert*-butyl-4-hydroxyphenyl)propionat, Pentaerythritol-tetrakis[3-(3,5-di-*tert*-butyl-4-hydroxyphenyl)propionat, Tris(3,5-di-*tert*-butyl-4-hydroxyphenyl)isocyanurat, 1,3,5-Trimethyl-2,4,6-tris(3,5-di-*tert*-butyl-4-hydroxyphenyl)isocyanurat, 1,3,5-Trimethyl-2,4,6-tris(3,5-di-*tert*-butyl-4-hydroxybenzyl)benzol, Triethylenglycol-bis[3-(3-*tert*-butyl-4-hydroxy-5-methylphenyl)propionat, N,N'-Hexan-1,6-diyl-bis[3-(3,5-di-*tert*-butyl-4-hydroxyphenyl)propionsäureamid.

Weitere geeignete Stabilisatoren sind Phosphite/Phosphonite. Geeignete Phosphite/Phosphonite sind beispielsweise:
Triphenylphosphit, Diphenylalkylphosphite, Phenyldialkylphosphite, Tri(nonylphenyl)phosphit, Trilaurylphosphite, Trioctadecylphosphit, Distearylpentaerythritoldiphosphit, Tris-(2,4-di-*tert*-butylphenyl)phosphit, Diisodecylpentaerythritoldiphosphit, Bis(2,4-di-*tert-*butylphenyl)pentaerythritoldiphosphit, Bis(2,4-di-cumylphenyl)pentaerythritoldiphosphit, Bis(2,6-di-*tert*-butyl-4-methylphenyl)pentaerythritoldiphosphit, Diisodecyloxypentaerythritoldiphosphit, Bis(2,4-di-*tert*-butyl-6-methylphenyl)pentaerythritoldiphosphit, Bis(2,4,6-tris(*tert-*butylphenyl)pentaerythritoldiphosphit, Tristearylsorbitoltriphosphit, Tetrakis(2,4-di-*tert*-butylphenyl)-4,4'-biphenylendiphosphonit, 6-Isooctyloxy-2,4,8,10-tetra-*tert*-butyl-12H-dibenz[d,g]-1,3,2-dioxaphosphocin, Bis(2,4-di-*tert*-butyl-6-methylphenyl)methylphosphit, Bis(2,4-di-*tert*-butyl-6-methylphenyl)ethylphosphit, 6-Fluoro-2,4,8,10-tetra-*tert*-butyl-12-methyl-dibenz[d,g]-1,3,2-dioxaphosphocin, 2,2'2"-Nitrilo[triethyltris(3,3",5,5'-tetra-*tert*-butyl-1,1'-biphenyl-2,2'-diyl)phosphit], 2-Ethylhexyl(3,3',5,5'-tetra-*tert-*butyl-1,1'-biphenyl-2,2'-diyl))phosphit, 5-Butyl-5-ethyl-2-(2,4,6-tri-*tert-*butylphenoxy)-1,3,2-dioxaphosphiran.

Besonders bevorzugte Phosphite/Phosphonite sind:

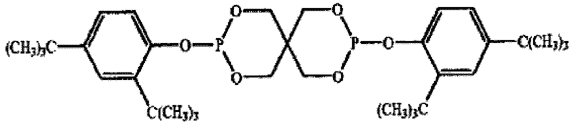

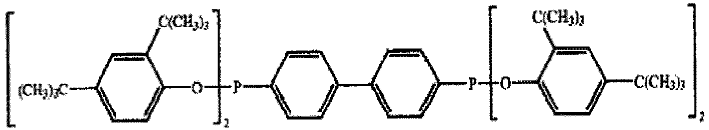

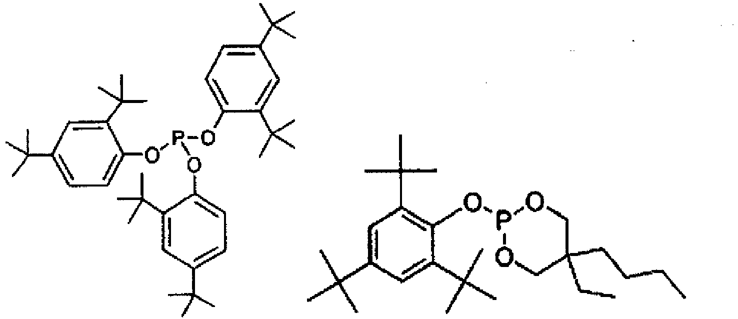

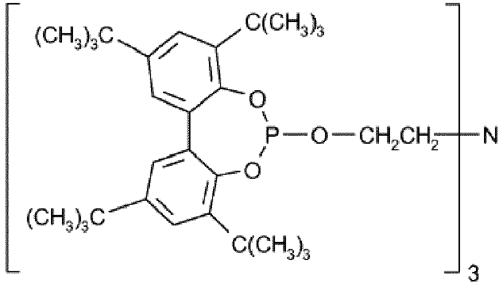

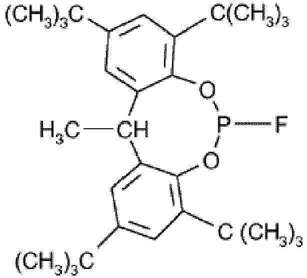

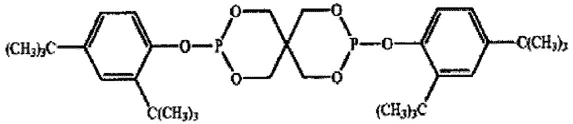

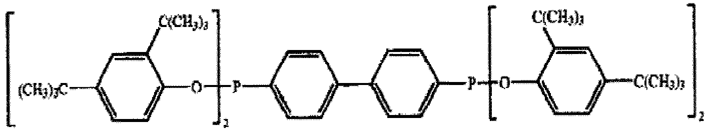

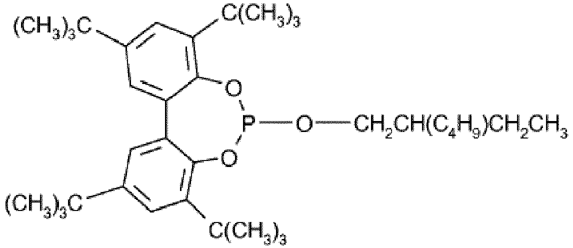

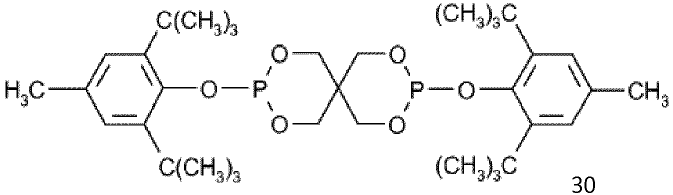

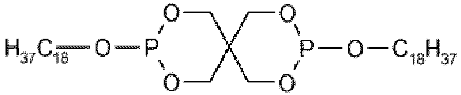

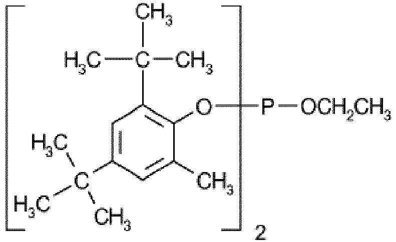

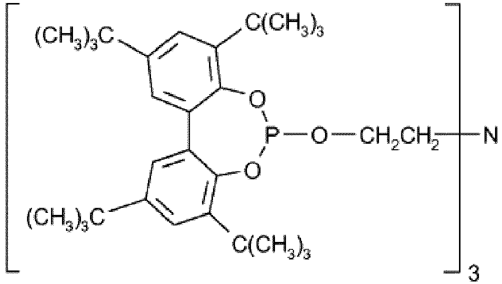

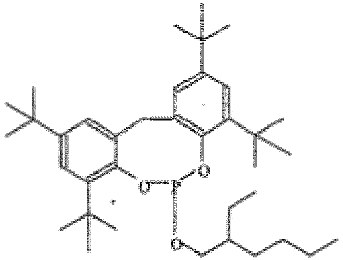

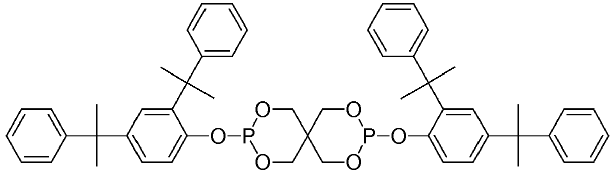

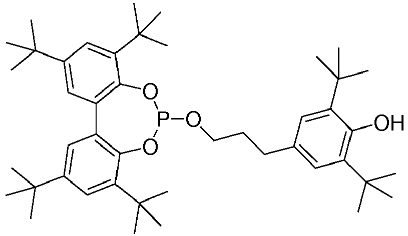

Weitere geeignete Stabilisatoren sind aminische Antioxidantien. Geeignete aminische Antioxidantien sind beispielsweise:
N,N'-Di-isopropyl-p-phenylendiamin, N,N'-Di-*sec*-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylendiamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-*sec*-butyl-p-phenylendiamin, Diphenylamin, N-Allyldiphenylamin, 4-Isopropoxydiphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylamino-phenol, Bis(4-methoxyphenyl)amin, 2,6-Di-tert-butyl-4-dimethylaminomethyl-phenol, 2,4'-Diaminodiphenylmethan, 4,4'-Diaminodiphenylmethan, N,N,N',N'-Tetra-methyl-4,4'-diaminodiphenylmethan, 1,2-Bis[(2-methyl-phenyl)amino]ethan, 1,2-Bis(phenylamino)propan, (o-Tolyl)biguanid, Bis[4-(1',3'-dimethylbutyl)phenyl]amin, tert-octyliertes N-Phenyl-1-naphthylamin, ein Gemisch aus mono- und dialkylierten *tert*-Butyl/*tert*-Octyldiphenylaminen, ein Gemisch aus mono- und dialkylierten Nonyldiphenylaminen, ein Gemisch aus mono- und dialkylierten Dodecyldiphenylaminen, ein Gemisch aus mono- und dialkylierten Isopropyl/Isohexyl-diphenylaminen, ein Gemisch aus mono- und dialkylierten *tert*-Butyldiphenylaminen, 2,3-Dihydro-3,3-dimethyl-4H-1,4-benzothiazin, Phenothiazin, ein Gemisch aus mono- und dialkylierten *tert*-Butyl/*tert*-Octylphenothiazinen, ein Gemisch aus mono- und dialkylierten *tert*-Octylphenothiazinen, N-Allylphenothiazin, N,N,N',N'-Tetraphenyl-1,4-diaminobut-2-en sowie Mischungen oder Kombinationen hiervon.

Weitere geeignete aminische Antioxidantien sind Hydroxylamine bzw. N-oxide (Nitrone), wie z.B. N,N-Dialkylhydroxylamine, N,N-Dibenzylhydroxylamin, N,N-Dilaurylhydroxylamin, N,N-Distearylhydroxylamin, N-Benzyl-α-phenylnitron, N-Octadecyl-α-hexadecylnitron, sowie Genox EP (Chemtura) gemäß der Formel:

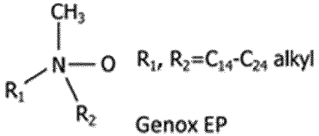

Weitere geeignete Stabilisatoren sind Thiosynergisten. Geeignete Thiosynergisten sind beispielsweise Distearylthiodipropionat, Dilauryldipropionat oder die Verbindung gemäß der folgenden Formel:

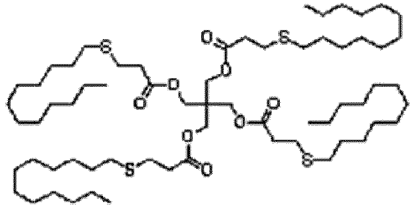

Weitere geeignete Stabilisatoren insbesondere für Polyamide sind Kupfersalze wie z.B. Kupfer-(I)-iodid, Kupfer-(I)-bromid oder Kupferkomplexe wie z.B. Triphenylphosphin-Kupfer-(I)-Komplexe.

Weitere geeignete Stabilisatoren sind gehinderte Amine. Geeignete gehinderte Amine sind beispielsweise 1,1-Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, Bis(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Succinsäure, lineare oder zyklische Kondensationsprodukte von N,N'-Bis(2,2,6,6-tetramethyl-4-piperidyl)hexamethylendiamin und 4-*tert*-Octylamino-2,6-di-chloro-1,3,5-triazin, Tris(2,2,6,6-tetramethyl-4-piperidyl)nitrilotriacetat, Tetrakis(2,2,6,6-tetra-methyl-4-piperidyl)-1,2,3,4-butantetracarboxylat, 1,1'-(1,2-Ethandiyl)-bis(3,3,5,5-tetramethylpiperazinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorhydrin.

Geeignete Dispergiermittel sind beispielsweise:
Polyacrylate, z.B. Copolymere mit langkettigen Seitengruppen, Polyacrylat-Blockcopolymere, Alkylamide: z.B. N,N'-1,2-Ethandiylbisoctadecanamid Sorbitanester, z.B. Monostearylsorbitanester, Titanate und Zirconate, reaktive Copolymere mit funktionellen Gruppen z.B. Polypropylen-co-Acrylsäure, Polypropylen-co-Maleinsäureanhydrid, Polyethylen-co-Glycidylmethacrylat, Polystyrol-alt-Maleinsäureanhydrid-Polysiloxane: z.B. Dimethylsilandiol-Ethylenoxid Copolymer, Polyphenylsiloxan Copolymer, Amphiphile Copolymere: z.B. Polyethylen-block-Polyethylenoxid, Dendrimere, z.B. hydroxylgruppenhaltige Dendrimere.

Geeignete Nukleierungsmittel sind beispielsweise Talkum, Alkali oder Erdalkalisalze von mono- und polyfunktionellen Carbonsäuren wie z.B. Benzoesäure, Bernsteinsäure, Adipinsäure, z.B. Natriumbenzoat, Zinkglycerolat, Aluminium-hydroxy-bis(4-*tert*-butyl)benzoat, Benzylidensorbitole wie z.B. 1,3:2,4-Bis(Benzyliden)sorbitol oder 1,3:2,4-Bis(4-Methylbenzyliden)sorbitol, 2,2'-Methylen-bis-(4,6-di-*tert*-butylphenyl)phosphat, sowie Trisamide wie z.B. gemäß der folgenden Strukturen

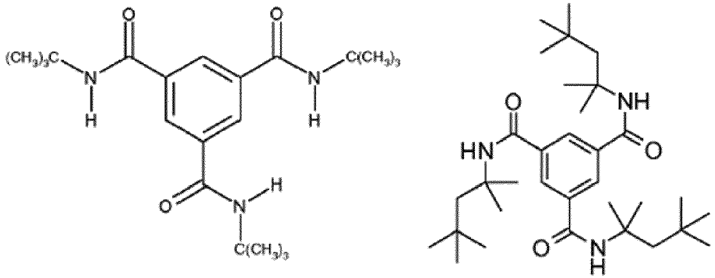

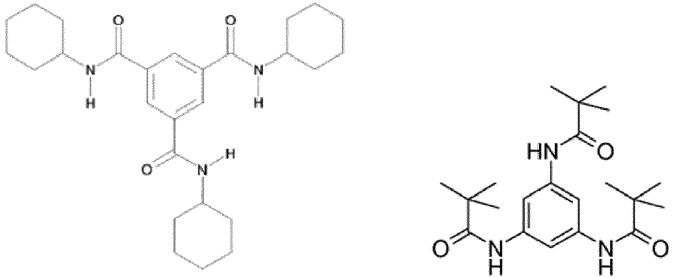

Geeignete Füllstoffe und Verstärkungsstoffe sind beispielsweise synthetische oder natürliche Materialien wie z.B. Calciumcarbonat, Silikate, Glasfasern, Glaskugeln (massiv oder hohl), Talkum, Glimmer, Kaolin, Bariumsulfat, Metalloxide und Metallhydroxide, Ruß, Graphit, Kohlenstoffnanoröhrchen, Graphen, Holzmehl oder Fasern von Naturprodukten wie z.B. Cellulose oder synthetische Fasern. Weitere geeignete Füllstoffe sind Hydrotalcite oder Zeolithe oder Schichtsilikate wie z.B. Montmorillonit, Bentonit, Beidelit, Mica, Hectorit, Saponit, Vermiculit, Ledikit, Magadit, Illit, Kaolinit, Wollastonit, Attapulgit.

Geeignete Pigmente können anorganischer oder organischer Natur sein. Anorganische Pigmente sind beispielsweise Titandioxid, Zinkoxid, Zinksulfid, Eisenoxid, Ultramarin, Ruß, organische Pigmente sind beispielsweise Anthrachinone, Anthanthrone, Benzimidazolone, Chinacridone, Diketopyrrolopyrrole, Dioxazine, Indanthrone, Isoindolinone, AzoVerbindungen, Perylene, Phthalocyanine oder Pyranthrone. Weitere geeignete Pigmente sind Effektpigmente auf Metallbasis oder Perlglanzpigmente auf Metalloxid-Basis.

Optische Aufheller sind beispielsweise Bisbenzoxazole, Phenylcumarine oder Bis(styryl)biphenyle und insbesondere optische Aufheller der Formeln:

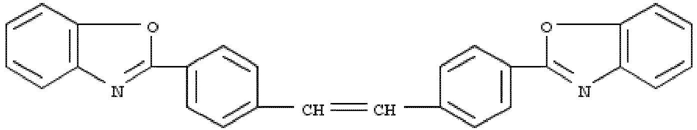

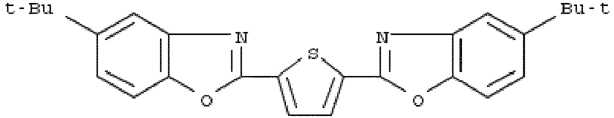

Geeignete Füllstoffdesaktivatoren sind beispielsweise Epoxide wie z.B. Bisphenol-A-diglycidylether, Polysiloxane, Polyacrylate insbesondere Blockcopolymere wie Polymethacrylsäure-polyalkylenoxid.

Geeignete Antistatika sind beispielsweise ethoxylierte Alkylamine, Fettsäureester, Alkylsulfonate und Polymere wie z.B. Polyetheramide.

Eine weitere bevorzugte Ausführungsform der erfindungsgemäßen Kunststoffformmasse sieht vor, dass die Kunststoffformmasse neben dem mindestens einen Copolymeren oder Polymeren und dem mindestens einen Kunststoff zusätzlich 0,01 bis 10 Gew.-Teile, bevorzugt 0,05 bis 3 Gew.-Teile, bezogen auf die Gesamtheit des mindestens einen Copolymeren oder Polymeren und des mindestens einen Kunststoffs, mindestens einen Stabilisator, ausgewählt aus der Gruppe bestehend aus phenolischen Antioxidantien, Phosphiten/Phosphoniten, aminischen Antioxidantien, schwefelhaltigen Antioxidantien oder Hydroxylaminen enthält.

Der Stabilisator ist dabei bevorzugt ausgewählt aus der Gruppe bestehend aus
a) Phenolischen Antioxidantien, insbesondere Octadecyl-3-(3,5-di-tert-butyl-4-hydroxyphenyl)propionat, Pentaerythritol-tetrakis[3-(3,5-di-*tert*-butyl-4-hydroxyphenyl)propionat, Tris(3,5-di-*tert*-butyl-4-hydroxyphenyl)iso-cyanurat, 1,3,5-Trimethyl-2,4,6-tris(3,5-di-*tert*-butyl-4-hydroxyphenyl)-isocyanurat, 1,3,5-Trimethyl-2,4,6-tris(3,5-di-*tert*-butyl-4-hydroxybenzyl)-benzol, Triethylenglycol-bis[3-(3-*tert*-butyl-4-hydroxy-5-methylphenyl)propionat, N,N'-Hexan-1,6-diyl-bis[3-(3,5-di-*tert*-butyl-4-hydroxyphenyl)propionsäureamid,
b) Phosphiten/Phosphoniten, insbesondere Tris-(2,4-di-*tert*-butylphenyl)-phosphit, Diisodecylpentaerythritoldiphosphit, Bis(2,4-di-*tert-*butylphenyl)pentaerythritoldiphosphit, Bis(2,4-di-cumyl-phenyl)pentaerythritoldiphosph it, Bis(2,6-di-*tert*-butyl-4-methylphenyl)-pentaerythritoldiphosphit, Diisodecyloxypentaerythritoldiphosphit, Bis(2,4-di-*tert*-butyl-6-methylphenyl)pentaerythritoldiphosphit, Bis(2,4, 6-tris(*tert*-butylphenyl)pentaerythritoldiphosphit, Tetrakis(2,4-di-tert-butylphenyl)-4,4'biphenylendiphosphonit,
c) Aminischen Antioxidantien, insbesondere N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N' -Bis(1-methylheptyl)-p-phenylendiamin, N,N'-Dicyclohexylp-phenylendiam in, N,N' -Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylen-diamin, N(1-Methylheptyl)-N'-phenyl-p-phenylendiamin, N-Cyclohexyl-N'-phenyl-p-phenylendiamin,
d) Schwefelhaltigen Antioxidantien, insbesondere Distearylthiodipropionat, Dilauryldipropionat,
e) Hydroxylaminen, insbesondere N,N-Dialkylhydroxylamine, N,N-Dibenzyl-hydroxylamin, N,N-Dilaurylhydroxylamin, N,N-Distearylhydroxylamin, N-Benzyl-α-phenylnitron, N-Octadecyl-α-hexadecylnitron,
f) Gehinderten Aminen, insbesondere 1,1-Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, Bis(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Succinsäure, lineare oder zyklische Kondensationsprodukte von N,N'-Bis(2,2,6,6-tetramethyl-4-piperidyl)hexamethylendiamin und 4-*tert*-Octylamino-2,6-di-chloro-1,3,5-triazin, Tris(2,2,6,6-tetramethyl-4-piperidyl)nitrilotriacetat, Tetrakis(2,2,6,6-tetra-methyl-4-piperidyl)-1,2,3,4-butantetracarboxylat, 1,1'-(1,2-Ethandiyl)-bis(3,3,5,5-tetramethylpiperazinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorhydrin.

In einer weiteren bevorzugten Variante der erfindungsgemäßen Kunststoffformmasse ist der mindestens eine Kunststoff ausgewählt aus der Gruppe bestehend aus
a) Polymere aus Olefinen oder Diolefinen wie z.B. Polyethylen (LDPE, LLDPE, VLDPE, MDPE, HDPE), Polypropylen, Polyisobutylen, Poly-4-methylpenten-I, Polybutadien, Polyisopren, Polycycloocten, sowie Copolymere in Form von statistischen oder Blockstrukturen wie z.B. Polypropylen-Polyethylen (EP), EPM oder EPDM, Ethylen-Vinylacetat (EVA), Ethylen-Acrylester,
b) Polystyrol, Polymethylstyrol, Styrol-Butadien, Styrol-Butadien-Styrol (SBS), Styrolisopren, Styrol-Butadien-Acrylnitril (ABS), Styrol-Acrylnitril-Acrylat (ASA), Styrol-Maleinsäureanhydrid-Polymere einschließlich entsprechender Pfropfcopolymere, wie z.B. Styrol auf Butadien oder Maleinsäureanhydrid auf SBS,
c) Halogenenthaltende Polymere, wie z.B. Polyvinylchlorid und Polyvinylidenchlorid,
d) Polymere von ungesättigten Estern wie z.B. Polyacrylate und Polymethacrylate wie PMMA, Polyacrylnitril,
e) Polymere aus ungesättigten Alkoholen und Derivaten, wie z.B. Polyvinylalkohol, Polyvinylacetat. Polyvinylbutyral,
f) Polyacetale, wie z.B. Polyoxymethylen,
g) Polyphenylenoxide und Blends mit Polystyrol,
h) Polyurethane, insbesondere lineare Polyurethane,
i) Polyamide, wie z.B. Polyamid-6, 6.6., 6.10. 4.6, 4.10, 6.12,12.12., Polyamid 11, Polyamid 12 sowie (teil-)aromatische Polyamide wie z.B. Polyphthalamide,
j) Polyimide, Polyamidimide, Polyetherimide, Polyketone, Polysulfone, Polyethersulfone, Polyphenylensulfid,
k) Polyester, wie z.B. Polyethylenterephthalat und Polybutylenterephthalat, Polymilchsäure,
l) Polycarbonat,
m) Cellulosederivate, wie z.B. Cellulosenitrat, Celluloseacetat, Cellulosepropionat,
n) sowie Mischungen, Kombinationen oder Blends aus zwei oder mehr der zuvor genannten Polymeren.

Weiterhin ist bevorzugt, dass die Kunststoffformmasse in Form von Spritzgussteilen, Folien oder Filmen, Beschichtungen oder Lacken, Schäumen, Fasern, Kabeln, Kabelkanälen und Rohren, Profilen, Hohlkörpern, Bändchen, Membranen, wie z.B. Geomembranen, oder Klebstoffen vorliegt, die über Extrusion, Spritzguss, Blasformen, Kalandrieren, Pressverfahren, Spinnprozesse, Rotomoulding oder Streich- und Beschichtungsprozesse hergestellt werden z.B. für die Elektro- und Elektronikindustrie, Bauindustrie, Transportindustrie (Auto, Bahn, Flugzeug, Schiff), für medizinische Anwendungen, für Haushalts- und Elektrogeräte, Fahrzeugteile, Konsumartikel, Verpackungen, Möbel, Textilien. Ein weiterer Einsatzbereich sind Lacke, Farben und Beschichtungen (Coatings).

Die vorliegende Erfindung wird anhand der nachfolgenden Beispiele näher erläutert ohne die Erfindung auf die speziell dargestellten Parameter zu beschränken.

### Herstellung von erfindungsgemäßen Polymeren

### Beispiel 1: Synthese von Ethylen-N-Hydroxymaleimidmethylether-Copolymer (EMA1) mit alternierenden Monomereinheiten

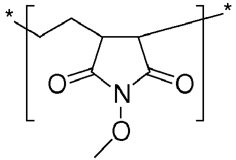

In einem Schlenkkolben mit Magnetrührstäbchen werden 10 g Polyethylenalt-maleinsäureanhydrid (ZeMac® E60P erhältlich von Vertellus) und 7,3 g *O-*Methylhydroxylamin Hydrochlorid (erhältlich von TCI Deutschland GmbH) unter einer Stickstoffatmosphäre in 150 mL trockenem Dimethylformamid gelöst. Die Lösung wird anschließend für zwei Stunden bei 90 °C unter Rühren erhitzt. Das resultierende Polymer wird in Methanol zur Fällung gebracht und darauf durch wiederholtes Lösen in Acetonitril und Ausfällen in Methanol aufgereinigt.
¹H-NMR (300 MHz, DMSO) δ = 3,80 (s, -CH₃), 3,32 (s, erythro -CH-), 2,60 (s, -CH-), 1,91-1,70 (m, -CH₂-) ppm.
¹³C-NMR (76 MHz, DMSO) δ = 172,92 (-C=O), 64,15 (CH₃), 42,02 (-CH-), 27,13 (-CH₂-) ppm.

### Beispiel 2: Synthese von Ethylen-N-Hydroxymaleimidbenzylether-Copolymer (EMA2) mit alternierenden Monomereinheiten

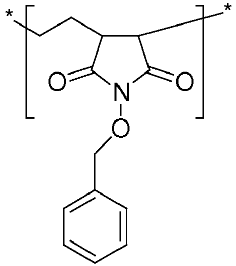

In Analogie zur in Beispiel 1 beschriebenen Synthese werden 10 g Polyethylenalt-maleinsäureanhydrid und 13,9 g *O*-Benzylhydroxylamin Hydrochlorid (erhältlich von TCI Deutschland GmbH) unter einer Stickstoffatmosphäre in 150 mL trockenem Dimethylformamid gelöst. Die Lösung wird anschließend für zwei Stunden bei 90 °C unter Rühren erhitzt. Das resultierende Polymer wird in Methanol zur Fällung gebracht und darauf durch wiederholtes Lösen in Tetrahydrofuran und Ausfällen in Methanol aufgereinigt.
¹H-NMR (300 MHz, DMSO) δ = 7,43 (s, ortho Ph-H), 7,36 (s, meta/para PhH), 5,03 (s, Ph-CH₂-), 3,58 (s, -CH-), 3,34 (s, -CH-), 1,91-1,70 (m, -CH₂-) ppm.
¹³C-NMR (76 MHz, DMSO) δ = 173,08 (-C=O), 133,81 (tert-C), 129,66 (ortho-C), 129,06 (meta-C), 128,37 (para-C), 77,82 (Ph-CH₂-), 41,84 (-CH-), 26,76 (-CH₂-) ppm.

### Herstellung und Prüfung einer erfindungsgemäßen flammgeschützten Kunststoff-Mischung

Die Extrusionen der Polypropylen-Proben (DOW C766-03) erfolgen bei einer Temperatur von 190 °C und einer Schneckendrehzahl von 150 U/min auf einem 11 mm Doppelschneckenextruder (Process 11 von Thermo Scientific). Das gewünschte Verhältnis aus Polymer und Additiven wird zunächst durch Mischen homogenisiert und über eine volumetrische Dosierung der Extrusion zugeführt.

Probekörper für die Brandprüfung werden aus dem Granulat bei einer Temperatur von 220 °C und einem Druck von 2 t unter Verwendung einer hydraulischen 10t-Presse (Werner & Pfleiderer) hergestellt. Dazu wird das Granulat in die Pressform eingefüllt und diese in die bereits vorgeheizte Presse überführt. Bei einem Druck von 0,5 t wird das Granulat zunächst 60 s lang aufgeschmolzen. Nach Ablauf der Schmelzzeit wird der Druck auf 2 t erhöht und für weitere 3 min konstant gehalten. Unter Beibehaltung des Anpressdruckes wird die Form auf 60 °C abgekühlt und danach die Probekörper entnommen. Die Probekörper haben gemäß Norm die folgenden Dimensionen: 127,5 x 12,5 x 1,5 mm.

Tabelle 1 gibt Zusammensetzungen in Polypropylen und Ergebnisse der Brandprüfung an. Die in der Tabelle 1 enthaltenen erfindungsgemäßen Beispiele und Vergleichsbeispiele wurden nach DIN EN 60695-11-10 geprüft und die Brennzeiten und Klassifizierung gemäß Norm eingehalten.

Als Diethylaluminiumphosphinat wurde das Produkt Exolit OP 1230 von Clariant SE verwendet.

**Tabelle 1**

| Beispiel | Zusammensetzung Flammschutzmittel | Brennzeiten Summe der Nachbrennzeiten von 5 Prüfkörpern bei 2 Beflammungen | Klassifizierung nach DIN EN 60695-11-10 |
|---|---|---|---|
| Vergleichsbeispiel 1 (Stand der Technik) | 15 % Diethylaluminiumphosphinat | > 200 Sekunden | Nicht klassifiziert |
| Vergleichsbeispiel 2 | 20 % Diethylaluminiumphosphinat | 170 Sekunden | Nicht klassifiziert |
| Erfindungsgemäßes Beispiel 3 | 15 % Diethylaluminiumphosphinat + 2 % EMA 1 | 21,7 Sekunden | V-2 |
| Erfindungsgemäßes Beispiel 4 | 15 % Diethylaluminiumphosphinat + 2 % EMA 2 | 71,8 Sekunden | V-2 |

Die erfindungsgemäßen Beispiele weisen überraschenderweise verkürzte Brennzeiten gegenüber den Vergleichsbeispielen auf und es wird die Klassifizierung nach V-2 erhalten.

## Patentansprüche

1. Verwendung eines Copolymeren oder Polymeren, enthaltend mindestens eines der nachfolgend abgebildeten Strukturelemente
a) 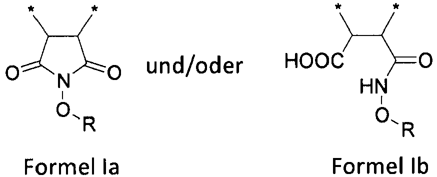 und/oder
b) 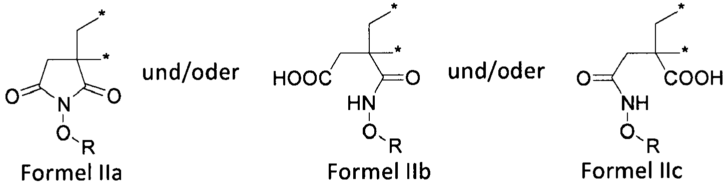 und/oder
c) 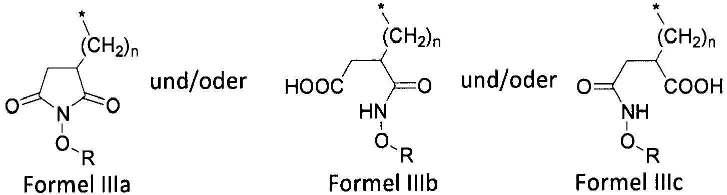 und/oder 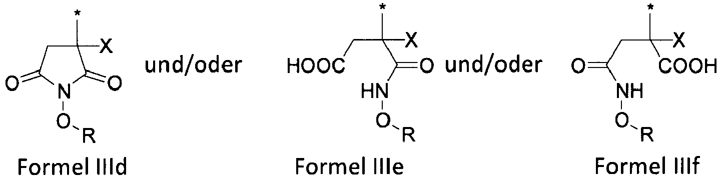
wobei jeweils unabhängig voneinander
R einen ggf. substituierten Alkylrest mit 1 bis 18 Kohlenstoffatomen, einen ggf. substituierten Cycloalkylrest mit 6 bis 22 Kohlenstoffatomen, einen ggf. substituierten Arylrest mit 6 bis 36 Kohlenstoffatomen oder einen ggf. substituierten Acylrest mit 2 bis 18 Kohlenstoffatomen,
* eine Anknüpfungsstelle zum Polymer,
n 0 oder 1, und
X Methyl
bedeuten,
als Flammschutzmittel für Kunststoffe, Stabilisator für Kunststoffe, Rheologiemodifikator für Kunststoffe, Initiator für Polymerisations- und Pfropfprozesse und/oder Vernetzungs- oder Kopplungsmittel.

2. Verwendung nach Anspruch 1, **dadurch gekennzeichnet, dass**
a) die Copolymeren oder Polymeren gemäß Merkmal a) durch Umsetzung von Malein-säureanhydrid enthaltenden Copolymeren oder Polymeren
b) die Copolymeren oder Polymeren gemäß Merkmal b) durch Umsetzung von Itaconsäureanhydrid enthaltenden Copolymeren oder Polymeren
c) die Copolymeren oder Polymeren gemäß Merkmal c) im Fall von n = 0 durch Umsetzung von Maleinsäureanhydrid gepfropften Polymeren oder Copolymeren, im Fall von n = 1 durch Umsetzung von Itaconsäureanhydrid gepfropften Polymeren oder Copolymeren
mit einer Aminverbindung gemäß der allgemeinen Formel IV
H₂N-O-R Formel IV
wobei R wie in Anspruch 1 definiert ist, erhältlich sind.

3. Verwendung nach vorhergehendem Anspruch, **dadurch gekennzeichnet, dass**
a) die Maleinsäureanhydrid-copolymeren ausgewählt sind aus der Gruppe bestehend aus Poly-maleinsäureanhydrid-co-alkylenen, insbesondere Poly-maleinsäureanhydrid-co-ethylen, Poly-maleinsäureanhydrid-co-propylen, Poly-maleinsäureanhydrid-co-butylen, Poly-maleinsäureanhydrid-co-hexen, Poly-maleinsäureanhydrid-co-octen, Poly-maleinsäureanhydrid-co-octadecen, Poly-maleinsäureanhydrid-co-butadien, Poly-maleinsäureanhydrid-co-vinylacetat, Poly-maleinsäureanhydrid-co-styrol, Poly-maleinsäureanhydrid-co-vinylmethylether, Poly-maleinsäureanhydrid-co-vinylchlorid, Poly-maleinsäureanhydrid-co-methyl(meth)acrylat, Poly-maleinsäureanhydrid-co-vinylalkyleether, insbesondere Poly-maleinsäureanhydrid-co-vinylethylether, Poly-maleinsäureanhydrid-co-vinylbutylether, Poly-maleinsäureanhydrid-co-vinylpyrrolidon, Poly-maleinsäureanhydrid-co-acrylnitril, sowie entsprechende Terpolymere und Blends oder Mischungen der zuvor genannten Copolymere,
b) die Itaconsäureanhydrid-copolymeren ausgewählt sind aus der Gruppe bestehend aus Poly-itaconsäureanhydrid-co-alkylenen, insbesondere Poly-itaconsäureanhydrid-co-ethylen, Poly-itaconsäureanhydrid-co-propylen, Poly-itaconsäureanhydrid-co-butylen, Poly-itaconsäureanhydrid-co-hexen, Poly-itaconsäureanhydrid-co-octen, Poly-itaconsäureanhydrid-co-octadecen, Poly-itaconsäureanhydrid-co-butadien, Poly-itaconsäureanhydrid-co-vinylacetat, Poly-itaconsäureanhydrid-co-styrol, Poly-itaconsäureanhydrid-co-vinylmethylether, Poly-itaconsäureanhydrid-co-vinylchlorid, Poly-itaconsäureanhydrid-co-methyl(meth)acrylat, Poly-itaconsäureanhydrid-co-vinylalkyleether, insbesondere Poly-itaconsäureanhydrid-co-vinylethylether, Poly-itaconsäureanhydrid-co-vinylbutylether, Poly-itaconsäureanhydrid-co-vinylpyrrolidon, Poly-itaconsäureanhydrid-co-acrylnitril, sowie entsprechende Terpolymere und Blends oder Mischungen der zuvor genannten Copolymere,
c) die Maleinsäureanhydrid gepfropften Polymeren oder Copolymeren ausgewählt sind aus der Gruppe bestehend aus Polyethylen-graft-maleinsäureanhydrid, Polypropylen-graft-maleinsäureanhydrid, Polystyrol-graft-maleinsäureanhydrid, Polystyrol-Butadien-graft-maleinsäureanhydrid-styrol, Polystyrolbutylen/ethylen-graft-maleinsäureanhydrid-styrol, und/oder die Itaconsäureanhydrid gepfropften Polymeren oder Copolymeren ausgewählt sind aus der Gruppe bestehend aus Polyethylen-graft-itaconsäureanhydrid, Polypropylen-graft-itaconsäureanhydrid, Polystyrol-graft-itaconsäureanhydrid, Polystyrol-Butadien-graft-itaconsäureanhydrid-styrol, Polystyrolbutylen/ethylen-graft-itaconsäureanhydrid-styrol sowie Blends oder Mischungen aus den zuvor genannten Pfropfpolymeren.

4. Verwendung nach einem der beiden vorhergehenden Ansprüche, **dadurch gekennzeichnet, dass**
a) der Gesamtgehalt der Strukturelemente la und Ib im Copolymeren von 0,1 bis 99 mol-%, bevorzugt 20 bis 80 mol-%,
b) der Gesamtgehalt der Strukturelemente IIa , IIb und IIc im Copolymeren von 0,1 bis 99 mol-%, bevorzugt 20 bis 80 mol-%,
c) der Gesamtgehalt der Strukturelemente IIIa, IIIb und IIIc im Pfropfcopolymeren oder Pfropfpolymeren von 0,1 bis 50 Gew.-%, bevorzugt von 0,5 bis 10 Gew.-% beträgt.

5. Verwendung nach einem der vorhergehenden Ansprüche, **dadurch gekennzeichnet, dass** der Kunststoff ausgewählt ist aus der Gruppe bestehend aus thermoplastischen, elastomeren oder duroplastischen Kunststoffen, insbesondere
a) Polymere aus Olefinen oder Diolefinen wie z.B. Polyethylen (LDPE, LLDPE, VLDPE, MDPE, HDPE), Polypropylen, Polyisobutylen, Poly-4-methyl-penten-I, Polybutadien, Polyisopren, Polycycloocten, sowie Copolymere in Form von statistischen oder Blockstrukturen wie z.B. Polypropylen-Polyethylen (EP), EPM oder EPDM, Ethylen-Vinylacetat (EVA), Ethylen-Acrylester,
b) Polystyrol, Polymethylstyrol, Styrol-Butadien, Styrol-Butadien-Styrol (SBS), Styrolisopren, Styrol-Butadien-Acrylnitril (ABS), Styrol-Acrylnitril-Acrylat (ASA), Styrol-Maleinsäureanhydrid-Polymere einschließlich entsprechender Pfropfcopolymere, wie z.B. Styrol auf Butadien oder Maleinsäureanhydrid auf SBS,
c) Halogenenthaltende Polymere, wie z.B. Polyvinylchlorid und Polyvinylidenchlorid,
d) Polymere von ungesättigten Estern wie z.B. Polyacrylate und Polymethacrylate wie PMMA, Polyacrylnitril,
e) Polymere aus ungesättigten Alkoholen und Derivaten, wie z.B. Polyvinylalkohol, Polyvinylacetat. Polyvinylbutyral,
f) Polyacetale, wie z.B. Polyoxymethylen,
g) Polyphenylenoxide und Blends mit Polystyrol,
h) Polyurethane, insbesondere lineare Polyurethane,
i) Polyamide, wie z.B. Polyamid-6, 6.6., 6.10. 4.6, 4.10, 6.12,12.12., Polyamid 11, Polyamid 12 sowie (teil-)aromatische Polyamide wie z.B. Polyphthalamide,
j) Polyimide, Polyamidimide, Polyetherimide, Polyketone, Polysulfone, Polyethersulfone, Polyphenylensulfid,
k) Polyester, wie z.B. Polyethylenterephthalat und Polybutylenterephthalat, Polymilchsäure,
l) Polycarbonat,
m) Cellulosederivate, wie z.B. Cellulosenitrat, Celluloseacetat, Cellulosepropionat,
n) sowie Mischungen, Kombinationen oder Blends aus zwei oder mehr der zuvor genannten Polymeren.

6. Verwendung nach einem der vorhergehenden Ansprüche, **dadurch gekennzeichnet, dass** das Copolymere oder Polymere dem Kunststoff zugemischt wird, wobei der Gesamtgehalt des Copolymeren oder-Polymeren im entstehenden Gemisch insbesondere 0,01 bis 50 Gew.-%, bevorzugt 0,05 bis 25 Gew.-%, beträgt.

7. Kunststoffformmasse, enthaltend mindestens ein Copolymer oder Polymer, enthaltend mindestens eine der nachfolgend abgebildeten Strukturelemente
a) 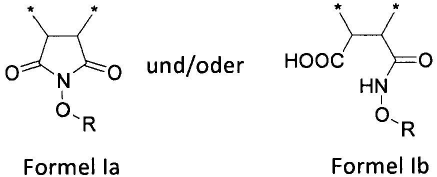 und/oder
b) 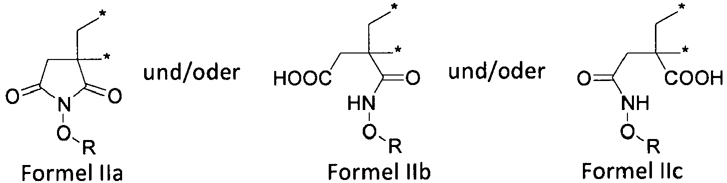 und/oder
c) 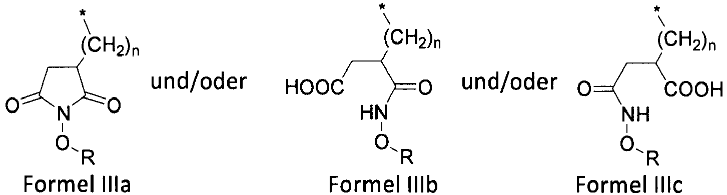 und/oder 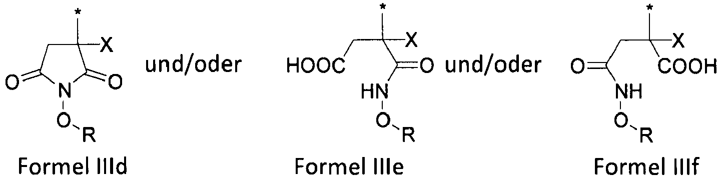
wobei jeweils unabhängig voneinander
R einen ggf. substituierten Alkylrest mit 1 bis 18 Kohlenstoffatomen, einen ggf. substituierten Cycloalkylrest mit 6 bis 22 Kohlenstoffatomen, einen ggf. substituierten Arylrest mit 6 bis 36 Kohlenstoffatomen oder einen ggf. substituierten Acylrest mit 2 bis 18 Kohlenstoffatomen,
* eine Anknüpfungsstelle zum Polymer,
n 0 oder 1
X Methyl
bedeuten, sowie
mindestens einen Kunststoff,
wobei der Gesamtgehalt des Copolymeren oder Polymeren in der Kunststoffformmasse 0,01 bis 50 Gew.-% beträgt.

8. Kunststoffformmasse nach vorhergehendem Anspruch, **dadurch gekennzeichnet, dass** der Gesamtgehalt des Copolymeren oder Polymeren in der Kunststoffformmasse 0,05 bis 25 Gew.-% beträgt.

9. Kunststoffformmasse nach einem der beiden vorhergehenden Ansprüche, **dadurch gekennzeichnet, dass** die Kunststoffformmasse neben dem mindestens einen Copolymeren oder Polymeren und dem mindestens einen Kunststoff zusätzlich bis zu 70 Gew.-Teile, bevorzugt bis zu 25 Gew.-Teile, bezogen auf die Gesamtheit des mindestens einen Copolymeren oder Polymeren und des mindestens einen Kunststoffs, mindestens ein Flammschutzmittel, ausgewählt aus der Gruppe bestehend aus phosphorhaltigen, stickstoffhaltigen, anorganischen, siliciumhaltigen, borhaltigen, halogenhaltigen und/oder radikalbildenden Flammschutzmitteln enthält.

10. Kunststoffformmasse nach vorhergehendem Anspruch, **dadurch gekennzeichnet, dass** das mindestens eine Flammschutzmittel ausgewählt ist aus der Gruppe bestehend aus
a) anorganischen Flammschutzmitteln wie z.B. Al(OH)₃, Mg(OH)₂, AIO(OH), Schichtsilikate wie z.B. Montmorillonit, nicht oder organisch modifiziert, Doppelsalze, wie z.B. Mg-Al-Silikate, POSS-Verbindungen,
b) Stickstoffhaltigen Flammschutzmitteln wie z.B. Melamin, Melem, Melam, Melon, Melaminderivate, Polyisocyanurate, Melaminkondensationsprodukte Allantoin, Phosphacene insbesondere Melaminsalze, Benzoguanamin, Melamincyanurat, Melaminphosphat, Melaminpyrophosphat, Dimelaminphosphat, Melaminpolyphosphat, Ammoniumpolyphosphat, Melaminborat, Melaminhydrobromid,
c) Phosphorhaltigen Flammschutzmitteln wie z.B. roter Phosphor, Phosphate wie z.B. Resorcindiphosphat, Bisphenol-A-diphosphat und ihre Oligomere, Triphenylphosphat, Phosphinate wie z.B. Salze der hypophosphorigen Säure und Ihrer Derivate wie Diethylaluminiumphosphinat oder Aluminiumphosphinat, Phosphonatester, oligomere und polymere Derivate der Methanphosphonsäure, 9,10-Dihydro-9-oxa-10-phosphorylphenanthren-10-oxid (DOPO) und deren substituierte Verbindungen,
d) Halogenhaltigen Flammschutzmitteln auf Chlor- und Brombasis, wie z.B. polybrominierte Diphenyloxide, Tris(3-bromo-2,2-bis(brommethyl)propyl-phosphat, Ethylenbis(tetrabromphthalimid), Tetrabrom-bisphenol A, bromiertes Polystyrol, bromiertes Polybutadien,
e) Schwefelhaltigen Flammschutzmitteln, wie z.B. elementarer Schwefel, Disulfide und Polysulfide, Thiuramsulfid, Dithiocarbamate, Mercaptobenzthiazol und Sulfenamide,
f) Boraten, wie z.B. Zinkborat oder Calciumborat,
g) Antidrip-Mitteln, wie z.B. Polytetrafluorethylen,
h) Siliciumhaltigen Verbindungen, wie z.B. Polyphenylsiloxane,
i) Radikalbildenden Substanzen, wie z.B. Alkoxyamine, Hydroxylaminester, Azoverbindungen, Dicumyl oder Polycumyl.

11. Kunststoffformmasse nach einem der Ansprüche 7 bis 10, **dadurch gekennzeichnet, dass** sie Zusatzstoffe, ausgewählt aus der Gruppe bestehend aus UV-Absorbern, Lichtstabilisatoren, Stabilisatoren, wie der Benzofuranone, Nukleierungsmitteln, Schlagzähigkeitsverbesserern, Weichmachern, Gleitmitteln, Rheologiemodifikatoren, Verarbeitungshilfsmitteln, Pigmenten, Farbstoffen, optischen Aufhellern, antimikrobiellen Wirkstoffen, Antistatika, Slipmitteln, Antiblockmitteln, Kopplungsmitteln, Dispergiermitteln, Kompatibilisatoren, Sauerstofffängern, Markierungsmitteln, Antifoggingmitteln oder Säurefängern, bevorzugt Säurefänger auf Basis von Salzen langkettiger Säuren wie z.B. Calciumstearat, Magnesiumstearat, Zinkstearat, Aluminiumstearat, Calciumlactat, Calciumstearoyl-2-lactylate oder von Hydrotalciten, enthält.

12. Kunststoffformmasse nach einem der Ansprüche 7 bis 11, **dadurch gekennzeichnet, dass** die Kunststoffformmasse neben dem mindestens einen Copolymeren und Polymeren und dem mindestens einen Kunststoff zusätzlich 0,01 bis 10 Gew.-Teile, bevorzugt 0,05 bis 3 Gew.-Teile, bezogen auf die Gesamtheit des mindestens einen Copolymeren oder Polymeren und des mindestens einen Kunststoffs, mindestens einen Stabilisator, ausgewählt aus der Gruppe bestehend aus phenolischen Antioxidantien, Phosphiten/Phosphoniten, aminischen Antioxidantien, schwefelhaltigen Antioxidantien oder Hydroxylaminen enthält.

13. Kunststoffformmasse nach vorhergehendem Anspruch, **dadurch gekennzeichnet, dass** der mindestens eine Stabilisator ausgewählt ist aus der Gruppe bestehend aus
a) Phenolischen Antioxidantien, insbesondere Octadecyl-3-(3,5-di-tert-butyl-4-hydroxyphenyl)propionat, Pentaerythritol-tetrakis[3-(3,5-di-*tert*-butyl-4-hydroxyphenyl)propionat, Tris(3,5-di-*tert-*butyl-4-hydroxyphenyl)isocyanurat, 1,3,5-Trimethyl-2,4,6-tris(3,5-di-tert-butyl-4-hydroxyphenyl)isocyanurat, 1,3,5-Trimethyl-2,4,6-tris(3,5-di-*tert*-butyl-4-hydroxybenzyl)benzol, Triethylenglycol-bis[3-(3-*tert*-butyl-4-hydroxy-5-methylphenyl)propionat, N,N'-Hexan-1,6-diyl-bis[3-(3,5-di-*tert*-butyl-4-hydroxyphenyl)propionsäureamid,
b) Phosphiten/Phosphoniten, insbesondere Tris-(2,4-di-*tert*-butylphenyl)phosphit, Diisodecylpentaerythritoldiphosphit, Bis(2,4-di-*tert*-butylphenyl)pentaerythritoldiphosphit, Bis(2,*4*-di-cumylphenyl)pentaerythritoldiphosph it, Bis(2,6-di-*tert*-butyl-4-methylphenyl)pentaerythritoldiphosphit, Diisodecyloxypentaerythritoldiphosphit, Bis(2,4-di-*tert*-butyl-6-methylphenyl)pentaerythritoldiphosphit, Bis(2,4, 6-tris(*tert*-butylphenyl)pentaerythritoldiphosphit, Tetrakis(2,4-di-*tert*-butylphenyl)-4,4'biphenylendiphosphonit,
c) Aminischen Antioxidantien, insbesondere N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N' -Dicyclohexylp-phenylendiam in, N,N'-Diphenyl-p-phenylendiamin, N,N' -Bis(2-naphthyl)-p-phenylendiamin, N-Isopropyl-N'-phenyl-p-phenylendiamin, N-(1,3-Dimethylbutyl)-N'-phenyl-p-phenylen-diamin, N(1-Methylheptyl)-N'-phenyl-p-phenylendiamin, N-Cyclohexyl-N'-phenyl-p-phenylendiamin,
d) Schwefelhaltigen Antioxidantien, insbesondere Distearylthiodipropionat, Dilauryldipropionat,
e) Hydroxylaminen, insbesondere N,N-Dialkylhydroxylamine, N,N-Dibenzylhydroxylamin, N,N-Dilaurylhydroxylamin, N,N-Distearyl-hydroxylamin, N-Benzyl-α-phenylnitron, N-Octadecyl-α-hexadecylnitron,
f) Gehinderten Aminen, insbesondere 1,1-Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, Bis-(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Succinsäure, lineare oder zyklische Kondensationsprodukte von N,N'-Bis(2,2,6,6-tetramethyl-4-piperidyl)hexamethylendiamin und 4-*tert*-Octylamino-2,6-di-chloro-1,3,5-triazin, Tris(2,2,6,6-tetramethyl-4-piperidyl)nitrilotriacetat, Tetrakis(2,2,6,6-tetra-methyl-4-piperidyl)-1,2,3,4-butantetracarboxylat, 1,1'-(1,2-Ethandiyl)-bis-(3,3,5,5-tetramethylpiperazinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorhydrin.

14. Kunststoffformmasse nach einem der Ansprüche 7 bis 13, **dadurch gekennzeichnet, dass** der mindestens eine Kunststoff ausgewählt ist aus der Gruppe bestehend aus
a) Polymere aus Olefinen oder Diolefinen wie z.B. Polyethylen (LDPE, LLDPE, VLDPE, MDPE, HDPE), Polypropylen, Polyisobutylen, Poly-4-methyl-penten-I, Polybutadien, Polyisopren, Polycycloocten, sowie Copolymere in Form von statistischen oder Blockstrukturen wie z.B. Polypropylen-Polyethylen (EP), EPM oder EPDM, Ethylen-Vinylacetat (EVA), Ethylen-Acrylester,
b) Polystyrol, Polymethylstyrol, Styrol-Butadien, Styrol-Butadien-Styrol (SBS), Styrolisopren, Styrol-Butadien-Acrylnitril (ABS), Styrol-Acrylnitril-Acrylat (ASA), Styrol-Maleinsäureanhydrid-Polymere einschließlich entsprechender Pfropfcopolymere, wie z.B. Styrol auf Butadien oder Maleinsäureanhydrid auf SBS,
c) Halogenenthaltende Polymere, wie z.B. Polyvinylchlorid und Polyvinylidenchlorid,
d) Polymere von ungesättigten Estern wie z.B. Polyacrylate und Polymethacrylate wie PMMA, Polyacrylnitril,
e) Polymere aus ungesättigten Alkoholen und Derivaten, wie z.B. Polyvinylalkohol, Polyvinylacetat. Polyvinylbutyral,
f) Polyacetale, wie z.B. Polyoxymethylen,
g) Polyphenylenoxide und Blends mit Polystyrol,
h) Polyurethane, insbesondere lineare Polyurethane,
i) Polyamide, wie z.B. Polyamid-6, 6.6., 6.10. 4.6, 4.10, 6.12,12.12., Polyamid 11, Polyamid 12 sowie (teil-)aromatische Polyamide wie z.B. Polyphthalamide,
j) Polyimide, Polyamidimide, Polyetherimide, Polyketone, Polysulfone, Polyethersulfone, Polyphenylensulfid,
k) Polyester, wie z.B. Polyethylenterephthalat und Polybutylenterephthalat, Polymilchsäure,
l) Polycarbonat,
m) Cellulosederivate, wie z.B. Cellulosenitrat, Celluloseacetat, Cellulosepropionat,
n) sowie Mischungen, Kombinationen oder Blends aus zwei oder mehr der zuvor genannten Polymeren.

15. Kunststoffformmasse nach einem der Ansprüche 7 bis 14 in Form von Spritzgussteilen, Folien oder Filmen, Beschichtungen oder Lacken, Schäumen, Fasern, Kabeln, Kabelkanälen und Rohren, Profilen, Hohlkörpern, Bändchen, Membranen, wie z.B. Geomembranen, oder Klebstoffen, die über Extrusion, Spritzguss, Blasformen, Kalandrieren, Pressverfahren, Spinnprozesse, Rotomoulding oder Streich- und Beschichtungsprozesse hergestellt werden z.B. für die Elektro- und Elektronikindustrie, Bauindustrie, Transportindustrie, für medizinische Anwendungen, für Haushalts- und Elektrogeräte, Fahrzeugteile, Konsumartikel, Verpackungen, Möbel, Textilien.

## Claims

1. Use of a copolymer or polymer, comprising at least one of the subsequently illustrated structural elements,
a) 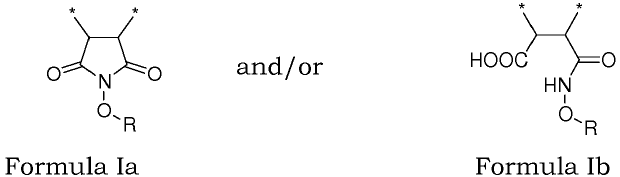 and/or
b) 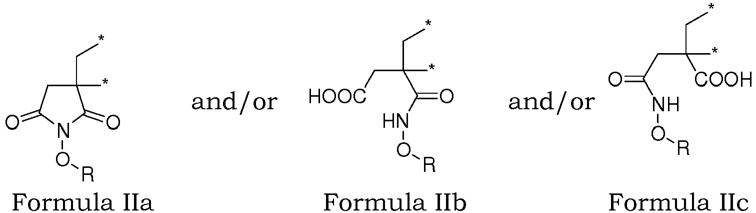 and/or
c) 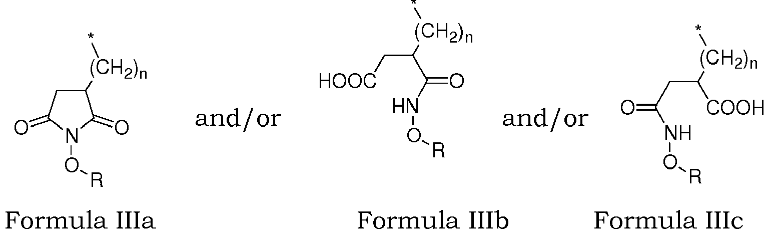 and/or 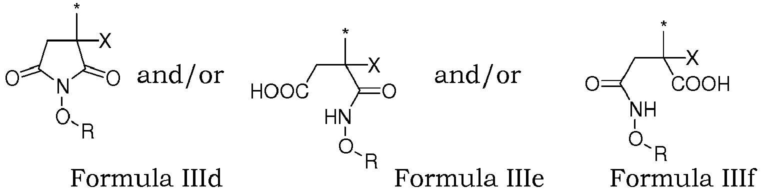
wherein the following mean, respectively independently of each other,
R a possibly substituted alkyl radical with 1 to 18 carbon atoms, a possibly substituted cycloalkyl radical with 6 to 22 carbon atoms, a possibly substituted aryl radical with 6 to 36 carbon atoms or a possibly substituted acyl radical with 2 to 18 carbon atoms,
* a binding site to the polymer,
n 0 or 1, and
X methyl
as flame retardant for plastic materials, stabiliser for plastic materials, rheology modifier for plastic materials, initiator for polymerisation- and grafting processes and/or crosslinking- or coupling agent.

2. Use according to claim 1, **characterised in that**
a) the copolymers or polymers according to feature a) are obtainable by conversion of copolymers or polymers comprising maleic anhydride
b) the copolymers or polymers according to feature b) are obtainable by conversion of copolymers or polymers comprising itaconic anhydride
c) the copolymers or polymers according to feature c), in the case of n = 0, are obtainable by conversion of polymers or copolymers grafted with maleic anhydride, in the case of n = 1 by conversion of polymers or copolymers grafted with itaconic anhydride with an amine compound according to the general formula IV
H₂N-O-R Formula IV
R being defined as in claim 1.

3. Use according to the preceding claim, **characterised in that**
a) the maleic anhydride copolymers are selected from the group consisting of polymaleic anhydride-co-alkylenes, in particular polymaleic anhydride-co-ethylene, polymaleic anhydride-co-propylene, polymaleic anhydride-co-butylene, polymaleic anhydride-co-hexene, polymaleic anhydride-co-octene, polymaleic anhydride-co-octadecene, polymaleic anhydride-co-butadiene, polymaleic anhydride-co-vinylacetate, polymaleic anhydride-co-styrene, polymaleic anhydride-co-vinylmethylether, polymaleic anhydride-co-vinylchloride, polymaleic anhydride-co-methyl-(meth)acrylate, polymaleic anhydride-co-vinylalkylether, in particular polymaleic anhydride-co-vinylethylether, polymaleic anhydride-co-vinylbutylether, polymaleic anhydride-co-vinylpyrrolidone, polymaleic anhydride-co-acrylonitrile, and also corresponding terpolymers and blends or mixtures of the previously mentioned copolymers,
b) the itaconic anhydride copolymers are selected from the group consisting of polyitaconic anhydride-co-alkylenes, in particular polyitaconic anhydride-co-ethylene, polyitaconic anhydride-co-propylene, polyitaconic anhydride-co-butylene, polyitaconic anhydride-co-hexene, polyitaconic anhydride-co-octene, polyitaconic anhydride-co-octadecene, polyitaconic anhydride-co-butadiene, polyitaconic-anhydride-co-vinylacetate, polyitaconic anhydride-co-styrene, polyitaconic anhydride-co-vinylmethylether, polyitaconic anhydride-co-vinylchloride, polyitaconic anhydride-co-methyl(meth)acrylate, polyitaconic anhydride-co-vinylalkyleether, in particular polyitaconic anhydride-co-vinylethylether, polyitaconic anhydride-co-vinylbutylether, polyitaconic anhydride-co-vinylpyrrolidone, polyitaconic anhydride-co-acrylonitrile, and also corresponding terpolymers and blends or mixtures of the previously mentioned copolymers,
c) the maleic anhydride grafted polymers or copolymers are selected from the group consisting of polyethylene-graft-maleic anhydride, polypropylene-graft-maleic anhydride, polystyrene-graft-maleic anhydride, polystyrene-butadiene-graft-maleic anhydride-styrene, polystyrene-butylene/ethylene-graft-maleic anhydride-styrene, and/or the itaconic anhydride-grafted polymers or copolymers are selected from the group consisting of polyethylene-graft-itaconic anhydride, polypropylene-graft-itaconic anhydride, polystyrene-graft-itaconic anhydride, polystyrene-butadiene-graft-itaconic anhydride-styrene, polystyrene-butylene/ethylene-graft-itaconic anhydride-styrene and also blends or mixtures of the previously mentioned graft copolymers.

4. Use according to one of the two preceding claims, **characterised in that**
a) the total content of the structural elements Ia and Ib in the copolymer is of 0.1 to 99% by mol, preferably 20 to 80% by mol,
b) the total content of the structural elements IIa, IIb and IIc in the copolymer is of 0.1 to 99% by mol, preferably 20 to 80% by mol,
c) the total content of the structural elements IIIa, IIIb and IIIc in the graft copolymer or graft polymer is of 0.1 to 50% by weight, preferably of 0.5 to 10% by weight.

5. Use according to one of the preceding claims, **characterised in that** the plastic material is selected from the group consisting of thermoplastic, elastomeric or duroplastic material, in particular
a) polymers made of olefins or dioefins, such as e.g. polyethylene (LDPE, LLDPE, VLDPE, MDPE, HDPE), polypropylene, polyisobutylene, poly-4-methylpentene-1, polybutadiene, polyisoprene, polycyclooctene, and also copolymers in the form of statistical or block structures, such as e.g. polypropylene-polyethylene (EP), EPM or EPDM, ethylene-vinylacetate (EVA),
b) polystyrene, polymethylstyrene, styrene-butadiene, styrene-butadiene-styrene (SBS), styrene-isoprene, styrene-butadiene-acrylonitrile (ABS), styrene-acrylonitrile-acrylate (ASA), styrene-maleic anhydride polymers including corresponding graft copolymers, such as e.g. styrene on butadiene or maleic anhydride on SBS,
c) halogen-containing polymers, such as e.g. polyvinylchloride and polyvinylidene chloride,
d) polymers of unsaturated esters, such as e.g. polyacrylates and polymethacrylates, such as PMMA, polyacrylonitrile,
e) polymers made of unsaturated alcohols and derivatives, such as e.g. polyvinylalcohol, polyvinylacetate, polyvinylbutyral,
f) polyacetals, such as e.g. polyoxymethylene,
g) polyphenylene oxides and blends with polystyrene,
h) polyurethanes, in particular linear polyurethanes,
i) polyamides, such as e.g. polyamide-6, 6.6, 6.10, 4.6, 4.10, 6.12, 12.12, polyamide 11, polyamide 12 and also (partially) aromatic polyamides, such as e.g. polyphthalamides,
j) polyimides, polyamideimides, polyetherimides, polyketones, polysulphones, polyethersulphones, polyphenylene sulphide
k) polyesters, such as e.g. polyethylene terephthalate, polybutylene terephthalate, polylactic acid,
l) polycarbonate,
m) cellulose derivatives, such as e.g. cellulose nitrate, cellulose acetate, cellulose propionate,
n) and also mixtures, combinations or blends of two or more of the previously mentioned polymers.

6. Use according to one of the preceding claims, **characterised in that** the copolymer or polymer is mixed with the plastic material, the total content of the copolymer or polymer in the resulting mixture being in particular 0.01 to 50% by weight, preferably 0.05 to 25% by weight.

7. Plastic material moulding compound, comprising at least one copolymer or polymer, comprising at least one of the subsequently illustrated structural elements
a) 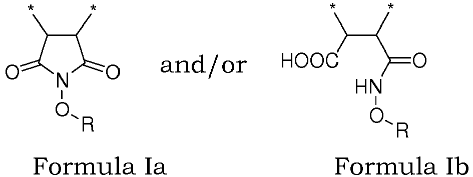 and/or
b) 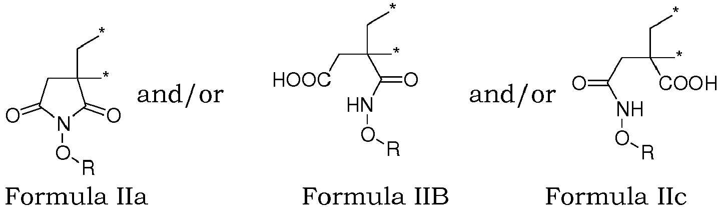 and/or
c) 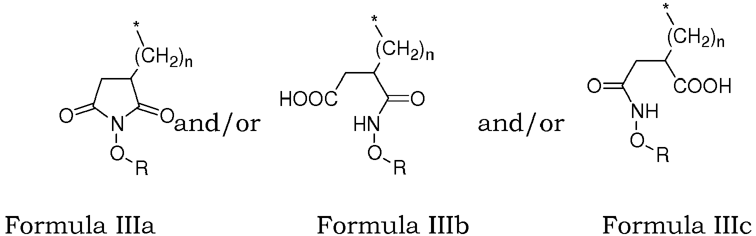 and/or 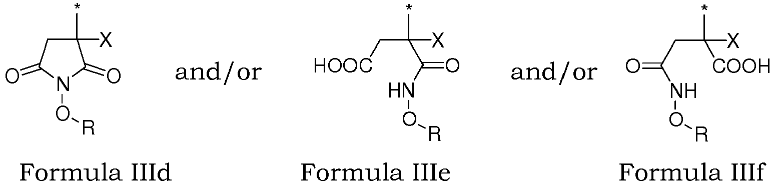 wherein, respectively independently of each other,
R means a possibly substituted alkyl radical with 1 to 18 carbon atoms, a possibly substituted cycloalkyl radical with 6 to 22 carbon atoms, a possibly substituted aryl radical with 6 to 36 carbon atoms or a possibly substituted acyl radical with 2 to 18 carbon atoms,
* a binding sight to the polymer,
n 0 or 1
X methyl and also
at least one plastic material, wherein the total content of the copolymer or polymer in the plastic material moulding compound is 0.01 to 50% by weight.

8. Plastic material moulding compound according to the preceding claim, **characterised in that** the total content of the copolymer or polymer in the plastic material moulding compound is 0.05 to 25% by weight.

9. Plastic material moulding compound according to one of the two preceding claims, **characterised in that** the plastic material moulding compound comprises, in addition to the at least one copolymer or polymer and the at least one plastic material, in addition up to 70 parts by weight, preferably up to 25 parts by weight, relative to the totality of the at least one copolymer or polymer and of the at least one plastic material, at least one flame retardant, selected from the group consisting of phosphorus-containing, nitrogen-containing, inorganic, silicon-containing, boron-containing, halogen-containing and/or radical-forming flame retardants.

10. Plastic material moulding compound according to the preceding claim, **characterised in that** the at least one flame retardant is selected from the group consisting of
a) inorganic flame retardants, such as e.g. Al(OH)₃, Mg(OH)₂, AIO(OH), layer silicates, such as e.g. montmorillonite, non- or organically modified, double salts, such as e.g. Mg-Al silicates, POSS compounds,
b) nitrogen-containing flame retardants, such as e.g. melamine, melem, melam, melon, melamine derivatives, polyisocyanurates, melamine condensation products, allantoin, phosphacene, in particular melamine salts, benzoguanamine, melamine cyanurate, melamine phosphate, melamine pyrophosphate, dimelamine phosphate, melamine polyphosphate, ammonium polyphosphate, melamine borate, melamine hydrobromide,
c) phosphorus-containing flame retardants, such as e.g. red phosphorus, phosphates, such as e.g. resorcin diphosphate, bisphenol-A-diphosphate and the oligomers thereof, triphenylphosphate, phosphinates, such as e.g. salts of hypophosphorous acid and derivatives thereof, such as diethylaluminium phosphinate or aluminium phosphinate, phosphonate ester, oligomeric and polymeric derivatives of methane phosphonic acid, 9,10-dihydro-9-oxa-10-phosphorylphenanthrene-10-oxide (DOPO) and substituted compounds thereof,
d) halogen-containing flame retardants based on chlorine and bromine, such as e.g. polybrominated diphenyloxides, tris(3-bromo-2,2-bis(bromomethyl)propylphosphate, ethylenebis(tetrabromophthalimide), tetrabromobisphenol A, brominated polystyrene, brominated polybutadiene,
e) sulphur-containing flame retardants, such as e.g. elementary sulphur, disulphides and polysulphides, thiuram sulphide, dithiocarbamates, mercaptobenzthiazole and sulphenamides,
f) borates, such as e.g. zinc borate or calcium borate,
g) antidrip agents, such as e.g. polytetrafluorethylene,
h) silicon-containing compounds, such as e.g. polyphenylsiloxanes,
i) radical-forming substances, such as e.g. alkoxyamines, hydroxylamine esters, azo compounds, dicumyl or polycumyl.

11. Plastic material moulding compound according to one of the claims 7 to 10, **characterised in that** it comprises additives, selected from the group consisting of UV absorbers, light stabilisers, stabilisers, such as benzofuranones, nucleation agents, impact strength improvers, plasticisers, lubricants, rheology modifiers, processing aids, pigments, colourants, optical brighteners, antimicrobial active substances, antistatic agents, slipping means, antiblocking means, coupling means, dispersants, compatabilisers, oxygen collectors, acid collectors, marking means, anti-fogging means, or acid interceptors, preferably acid interceptors based on salts of long-chain acids, such as e.g. calcium stearate, magnesium stearate, zinc stearate, aluminium stearate, calcium lactate, calcium stearoyl-2-lactylates or of hydrotalcites.

12. Plastic material moulding compound according to one of the claims 7 to 11, **characterised in that** that the plastic material moulding compound, in addition to the at least one copolymer and polymer and the at least one plastic material, comprises in addition 0.01 to 10 parts by weight, preferably 0.05 to 3 parts by weight, relative to the totality of the at least one copolymer or polymer and of the at least one plastic material, at least one stabiliser, selected from the group consisting of phenolic antioxidants, phosphites/phosphonites, aminic antioxidants, sulphur-containing antioxidants or hydroxylamines.

13. Plastic material moulding compound according to the preceding claim, **characterised in that** the at least one stabiliser is selected from the group consisting of
a) phenolic antioxidants, in particular octadecyl-3-(3,5-di-tert-butyl-4-hydroxyphenyl)propionate, pentaerythritoltetrakis[3-(3,5-di-*tert*-butyl-4-hydroxyphenyl)propionate, tris(3,5-di-*tert*-butyl-4-hydroxyphenyl)isocyanurate, 1,3,5-trimethyl-2,4,6-tris(3,5-di-*tert*-butyl-4-hydroxyphenyl)isocyanurate, 1,3,5-trimethyl-2,4,6-tris(3,5-di-*tert*-butyl-4-hydroxybenzyl)-benzene, triethylene glycol-bis[3-(3-*tert*-butyl-4-hydroxy-5-methylphenyl)propionate, N,N'-hexane-1,6-diyl-bis[3-(3,5-di-tert-butyl-4-hydroxyphenyl)propionic acid amide,
b) phosphites/phosphonites, in particular tris-(2,4-di-tert-butylphenyl)phosphite, diisodecylpentaerythritol diphosphite, bis(2,4-di-*tert*-butylphenyl)pentaerythritol diphosphite, bis(2,*4*-dicumylphenyl)pentaerythritol diphosphite, bis(2,6-di-*tert*-butyl-4-methylphenylpentaerythritol diphosphite, diisodecyloxypentaerythritol diphosphite, bis(2,4-di-*tert-*butyl-6-methylphenyl)pentaerythritol diphosphite, bis(2,4,6-tris(*tert*-butylphenyl)pentaerythritol diphosphite, tetrakis(2,4-di-*tert*-butylphenyl)-4,4'biphenylene diphosphonite,
c) aminic antioxidants, in particular N,N'-diisopropyl-p-phenylene diamine, N,N'-di-sec-butyl-p-phenylene diamine, N,N'-bis(1,4-dimethylpentyl)-p-phenylene diamine, N,N'-bis(1-ethyl-3-methylpentyl)-p-phenylene diamine, N,N'-bis(1-methylheptyl)-p-phenylene diamine, N,N'-dicyclohexyl-p-phenylene diamine, N,N'-diphenyl-p-phenylene diamine, N,N'-bis(2-naphthyl)-p-phenylene diamine, N-isopropyl-N'-phenyl-p-phenylene diamine, N-(1,3-dimethylbutyl)-N'-phenyl-p-phenylene diamine, N(1-methylheptyl)-N'-phenyl-p-phenylene diamine, N-cyclohexyl-N'-phenyl-p-phenylene diamine,
d) sulphur-containing antioxidants, in particular distearylthiodipropionate, dilauryldipropionate,
e) hydroxylamines, in particular N,N-dialkylhydroxylamines, N,N-dibenzylhydroxylamine, N,N-dilaurylhydroxylamine, N,N-distearylhydroxylamine, N-benzyl-α-phenylnitron, N-octadecyl-α-hexadecylnitron,
f) hindered amines, in particular 1,1-bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl)-n-butyl-3,5-di-tert-butyl-4-hydroxybenzylmalonate, the condensation product of 1-(2-hydroxyethyl)-2,2,6,6-tetramethyl-4-hydroxypiperidine and succinic acid, linear or cyclic condensation products of N,N'-bis(2,2,6,6-tetramethyl-4-piperidyl)hexamethylene diamine and 4-*tert-*octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butane tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, linear or cyclic condensation products of N,N'-bis(2,2,6,6-tetramethyl-4-piperidyl)hexamethylene diamine and 4-morpholino-2,6-dichloro-1,3,5-triazine, the reaction product of 7,7,9,9-tetramethyl-2-cycloundecyl-1-oxa-3,8-diaza-4-oxospiro-[4,5]decane and epichlorohydrin.

14. Plastic material moulding compound according to one of the claims 7 to 13, **characterised in that** the at least one plastic material is selected from the group consisting of
a) polymers made of olefins or diolefins such as e.g. polyethylene (LDPE, LLDPE, VLDPE, MDPE, HDPE), polypropylene, polyisobutylene, poly-4-methylpentene-1, polybutadiene, polyisoprene, polycyclooctene, and also copolymers in the form of statistical or block structures such as e.g. polypropylene-polyethylene (EP), EPM or EPDM, ethylene-vinylacetate (EVA), ethylene-acrylic ester,
b) polystyrene, polymethylstyrene, styrene-butadiene, styrene-butadiene-styrene (SBS), styrene-isoprene, styrene-butadiene-acrylonitrile (ABS), styrene-acrylonitrile-acrylate (ASA), styrene-maleic anhydride polymers including corresponding graft copolymers, such as e.g. styrene on butadiene or maleic anhydride on SBS,
c) halogen-comprising polymers, such as e.g. polyvinylchloride and polyvinylidene chloride,
d) polymers of unsaturated esters such as e.g. polyacrylates and polymethacrylates such as PMMA, polyacrylonitrile,
e) polymers of unsaturated alcohols and derivatives, such as e.g. polyvinyl alcohol, polyvinylacetate, polyvinylbutyral,
f) polyacetals, such as e.g. polyoxymethylene,
g) polyphenylene oxides and blends with polystyrene,
h) polyurethanes, in particular linear polyurethanes,
i) polyamides, such as e.g. polyamide-6, 6.6., 6.10. 4.6, 4.10, 6.12,12.12., polyamide 11, polyamide 12 and also (partially) aromatic polyamides such as e.g. polyphthalamides,
j) polyimides, polyamideimides, polyetherimides, polyketones, polysulphones, polyethersulphones, polyphenylenesulphide,
k) polyesters, such as e.g. polyethylene terephthalate and polybutylene terephthalate, polylactic acid,
l) polycarbonate,
m) cellulose derivatives, such as e.g. cellulose nitrate, cellulose acetate, cellulose propionate,
n) and also mixtures, combinations or blends of two or more of the previously mentioned polymers.

15. Plastic material moulding compound according to one of the claims 7 to 14, in the form of injection moulded parts, foils or films, coatings or paints, foams, fibres, cables, cable channels and pipes, profiles, hollow bodies, strips, membranes, such as e.g. geomembranes, or adhesives, which are produced via extrusion, injection moulding, blow-moulding, calendering, compression methods, spinning processes, rotomoulding or brushing- and coating processes, e.g. for the electrical and electronics industry, construction industry, transport industry, for medical applications, for household- and electrical appliances, vehicle parts, consumer articles, packaging, furniture, textiles.

## Revendications

1. Utilisation d'un copolymère ou d'un polymère contenant au moins l'un des éléments structuraux présentés ci-après :
a) 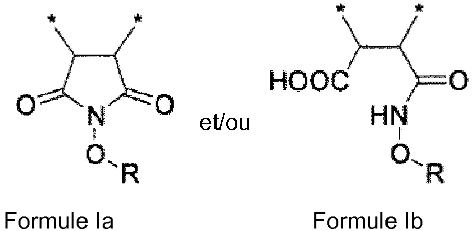 et/ou
b) 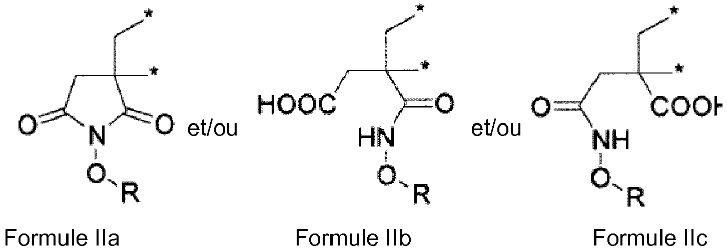 et/ou
c) 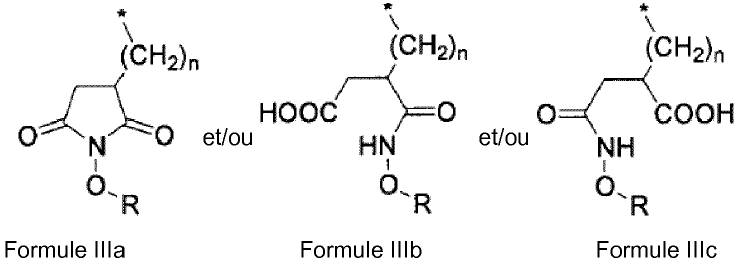 et/ou 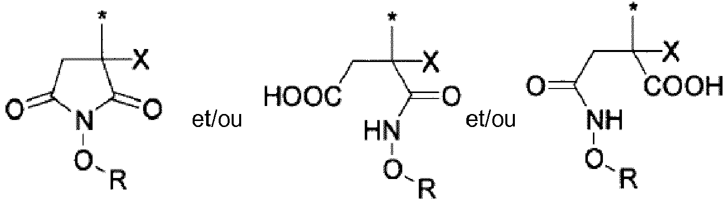 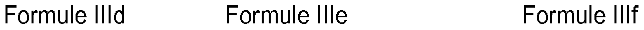 dans lesquels, indépendamment les uns des autres,
R désigne un radical alkyle ayant 1 à 18 atomes de carbone, éventuellement substitué, un radical cycloalkyle ayant 6 à 22 atomes de carbone, éventuellement substitué, un radical aryle ayant 6 à 36 atomes de carbone, éventuellement substitué, ou un radical acyle ayant 2 à 18 atomes de carbone, éventuellement substitué,
* désigne un site de liaison au polymère,
n vaut à 0 ou 1, et
X représente le groupe méthyle,
en tant qu'agent retardateur de flamme pour plastiques, stabilisant pour plastiques, agent modifiant la rhéologie pour plastiques, amorceur pour des procédés de polymérisation et de greffage, et/ou agent de réticulation ou de couplage.

2. Utilisation selon la revendication 1, **caractérisée en ce que**
a) les copolymères ou polymères selon la caractéristique a) peuvent être obtenus par réaction de copolymères ou de polymères contenant de l'anhydride maléique,
b) les copolymères ou polymères selon la caractéristique b) peuvent être obtenus par réaction de copolymères ou de polymères contenant de l'anhydride itaconique,
c) les copolymères ou polymères selon la caractéristique c) peuvent être obtenus, dans le cas dans lequel n = 0, par réaction de polymères ou de copolymères greffés par de l'anhydride maléique, dans le cas dans lequel n = 1, par réaction de polymères ou de copolymères greffés par de l'anhydride itaconique,
avec un composé amine selon la formule générale IV
H₂N-O-R Formule IV
dans laquelle R est tel que défini dans la revendication 1.

3. Utilisation selon la revendication précédente, **caractérisée en ce que**
a) les copolymères d'anhydride maléique sont choisis dans le groupe consistant en les poly-anhydride maléique-co-alkylènes, en particulier le poly-anhydride maléique-co-éthylène, le poly-anhydride maléique-co-propylène, le poly-anhydride maléique-co-butylène, le poly-anhydride maléique-co-hexène, le poly-anhydride maléique-co-octène, le poly-anhydride maléique-co-octadécène, le poly-anhydride maléique-co-butadiène, le poly-anhydride maléique-co-acétate de vinyle, le poly-anhydride maléique-co-styrène, le poly-anhydride maléique-co-vinylméthyléther, le poly-anhydride maléique-co-chlorure de vinyle, le poly-anhydride maléique-co-(méth)acrylate de méthyle, les poly-anhydride maléique-co-vinylalkyléthers, en particulier le poly-anhydride maléique-co-vinyléthyléther, le poly-anhydride maléique-co-vinylbutyléther, le poly-anhydride maléique-co-vinylpyrrolidone, le poly-anhydride maléique-co-acrylonitrile, ainsi que les terpolymères correspondants, et les mélanges ou mélanges intimes des copolymères mentionnés ci-dessus,
b) les copolymères d'anhydride itaconique sont choisis dans le groupe consistant en les poly-anhydride itaconique-co-alkylènes, en particulier le poly-anhydride itaconique-co-éthylène, le poly-anhydride itaconique-co-propylène, le poly-anhydride itaconique-co-butylène, le poly-anhydride itaconique-co-hexène, le poly-anhydride itaconique-co-octène, le poly-anhydride itaconique-co-octadécène, le poly-anhydride itaconique-co-butadiène, le poly-anhydride itaconique-co-acétate de vinyle, le poly-anhydride itaconique-co-styrène, le poly-anhydride itaconique-co-vinylméthyléther, le poly-anhydride itaconique-co-chlorure de vinyle, le poly-anhydride itaconique-co-(méth)acrylate de méthyle, les poly-anhydride itaconique-co-vinylalkyléthers, en particulier le poly-anhydride itaconique-co-vinyléthyléther, le poly-anhydride itaconique-co-vinylbutyléther, le poly-anhydride itaconique-co-vinylpyrrolidone, le poly-anhydride itaconique-co-acrylonitrile, ainsi que les terpolymères correspondants et les mélanges ou mélanges intimes des copolymères mentionnés ci-dessus,
c) les polymères ou copolymères greffés par de l'anhydride maléique sont choisis dans le groupe consistant en le polyéthylène-greffé-anhydride maléique, le polypropylène-greffé-anhydride maléique, le polystyrène-greffé-anhydride maléique, le polystyrène-butadiène-greffé-anhydride maléique-styrène, le polystyrène-butylène/éthylène-greffé-anhydride maléique-styrène, et/ou les polymères ou copolymères greffés par de l'anhydride itaconique choisis dans le groupe consistant en le polyéthylène-greffé-anhydride itaconique, le polypropylène-greffé-anhydride itaconique, le polystyrène-greffé-anhydride itaconique, le polystyrène-butadiène-greffé-anhydride itaconique-styrène, le polystyrène-butylène/éthylène-greffé-anhydride itaconique-styrène, ainsi que les mélanges ou mélanges intimes des polymères greffés mentionnés ci-dessus.

4. Utilisation selon l'une des deux revendications précédentes, **caractérisée en ce que**
a) la teneur totale du copolymère en les éléments structuraux Ia et Ib est de 0,1 à 99 % en moles, de préférence de 20 à 80 % en moles,
b) la teneur totale du copolymère en les éléments structuraux IIa, IIb et IIc est de 0,1 à 99 % en moles, de préférence de 20 à 80 % en moles,
c) la teneur totale du copolymère greffé ou du polymère greffé en les éléments structuraux IIIa, IIIb et IIIc est de 0,1 à 50 % en poids, de préférence de 0,5 à 10 % en poids.

5. Utilisation selon l'une des revendications précédentes, **caractérisée en ce que** le plastique est choisi dans le groupe consistant en les plastiques thermoplastiques, élastomères ou thermodurcissables, en particulier
a) les polymères d'oléfines ou de dioléfines, tels que par exemple le polyéthylène (PEBD, PEBDL, PETBL, PEMD, PEHD), le polypropylène, le polyisobutylène, le poly-4-méthyl-pentène-1, le polybutadiène, le polyisoprène, le polycyclooctène, ainsi que les copolymères sous forme de structures statistiques ou à blocs tels que par exemple le polypropylène-polyéthylène (EP), l'EPM ou l'EPDM, l'éthylène-acétate de vinyle (EVA), l'éthylène-ester d'acide acrylique,
b) le polystyrène, le polyméthylstyrène, le styrène-butadiène, le styrène-butadiène-styrène (SBS), le styrène-isoprène, le styrène-butadiène-acrylonitrile (ABS), le styrène-acrylonitrile-acrylate (ASA), les polymères styrène-anhydride maléique, y compris les copolymères greffés correspondants, tels que par exemple le styrène sur le butadiène ou l'anhydride maléique sur le SBS,
c) les polymères halogénés tels que par exemple le poly(chlorure de vinyle) et le poly(chlorure de vinylidène),
d) les polymères d'esters insaturés, tels que par exemple les polyacrylates et les polyméthacrylates tels que le PMMA, le polyacrylonitrile,
e) les polymères d'alcools insaturés et de leurs dérivés, tels que par exemple le poly(alcool vinylique), le poly(acétate de vinyle), le polyvinylbutyral,
f) les polyacétals, tels que par exemple le polyoxyméthylène,
g) les poly(oxydes de phénylène) et leurs mélanges avec le polystyrène,
h) les polyuréthannes, en particulier les polyuréthannes linéaires,
i) les polyamides, tels que par exemple le polyamide-6, 6.6, 6.10, 4.6, 4.10, 6.12, 12.12, le polyamide 11, le polyamide 12, ainsi que les polyamides (partiellement) aromatiques, tels que par exemple le polyphtalamide,
j) les polyimides, les polyamide-imides, les polyétherimides, les polycétones, les polysulfones, les polyéthersulfones, le poly(sulfure de phénylène),
k) les polyesters, tels que par exemple le poly(téréphtalate d'éthylène) et le poly(téréphtalate de butylène), le poly(acide lactique),
l) le polycarbonate,
m) les dérivés de la cellulose, tels que par exemple le nitrate de cellulose, l'acétate de cellulose, le propionate de cellulose,
n) ainsi que les mélanges, combinaisons ou mélanges intimes de deux des polymères mentionnés ci-dessus ou plus.

6. Utilisation selon l'une des revendications précédentes, **caractérisée en ce que** le copolymère ou le polymère est ajouté au plastique, la teneur totale du mélange obtenu en le copolymère ou le polymère étant en particulier de 0,01 à 50 % en poids, de préférence de 0,05 à 25 % en poids.

7. Mélange à mouler de plastiques, contenant au moins un copolymère ou un polymère contenant au moins l'un des éléments structuraux présentés ci-après :
a) 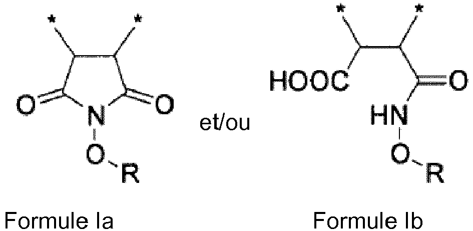 et/ou
b) 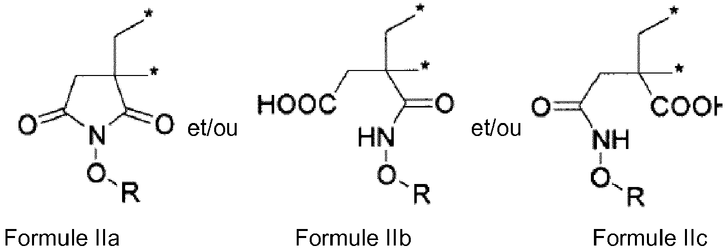 et/ou
c) 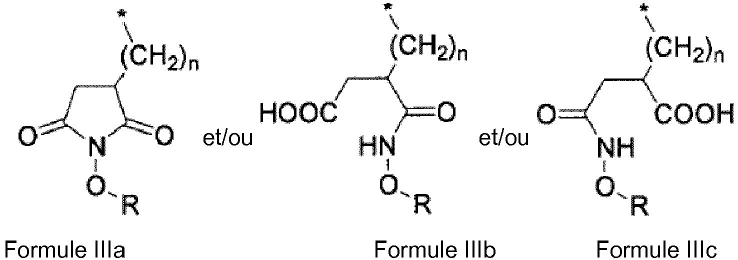 et/ou 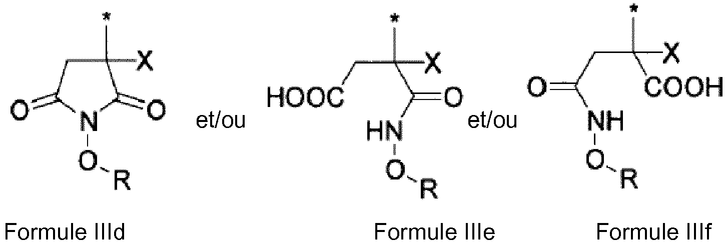
dans lesquels, indépendamment les uns des autres,
R désigne un radical alkyle ayant 1 à 18 atomes de carbone, éventuellement substitué, un radical cycloalkyle ayant 6 à 22 atomes de carbone, éventuellement substitué, un radical aryle ayant 6 à 36 atomes de carbone, éventuellement substitué, ou un radical acyle ayant 2 à 18 atomes de carbone, éventuellement substitué,
* désigne un point de liaison au polymère,
n vaut à 0 ou 1, et
X représente le groupe méthyle,
ainsi qu'au moins un plastique,
la teneur totale du mélange à mouler de plastiques en le copolymère ou le polymère étant de 0,01 à 50 % en poids.

8. Mélange à mouler de plastiques selon la revendication précédente, **caractérisé en ce que** la teneur totale du mélange à mouler de plastiques en le copolymère ou le polymère est de 0,05 à 25 % en poids.

9. Mélange à mouler de plastiques selon l'une des revendications précédentes, **caractérisé en ce que** le mélange à mouler de plastiques contient en outre, en plus de l'au moins un copolymère ou polymère et en plus de l'au moins un plastique, jusqu'à 70 parties en poids, de préférence jusqu'à 25 parties en poids, par rapport à la totalité de l'au moins un copolymère ou polymère et de l'au moins un plastique, d'au moins un agent retardateur de flamme, choisi dans le groupe consistant en les agents retardateurs de flamme phosphorés, azotés, inorganiques, siliciés, contenant du bore, halogénés et/ou formant des radicaux.

10. Mélange à mouler de plastiques selon la revendication précédente, **caractérisé en ce que** l'au moins un agent retardateur de flamme est choisi dans le groupe consistant en
a) les agents retardateurs de flamme inorganiques, tel que par exemple Al(OH)₃, Mg(OH)₂, AIO(OH), les phyllosilicates tels que par exemple la montmorillonite, modifiée ou non modifiée, les sels doubles, tels que par exemple les silicates de Mg et d'Al, les composés POSS,
b) les agents retardateurs de flamme azotés tels que par exemple la mélamine, le mélem, le mélam, le mélon, les dérivés de la mélamine, les polyisocyanurates, les produits de condensation de la mélamine, l'allantoïne, les phosphacènes, en particulier les sels de mélamine, la benzoguanamine, le cyanurate de mélamine, le phosphate de mélamine, le pyrophosphate de mélamine, le phosphate de dimélamine, le polyphosphate de mélamine, le polyphosphate d'ammonium, le borate de mélamine, le bromhydrate de mélamine,
c) les agents retardateurs de flamme phosphorés, tels que par exemple le phosphore rouge, les phosphates, tels que par exemple le diphosphate de résorcinol, le diphosphate de bisphénol-A et leurs oligomères, le phosphate de triphényle, les phosphinates, tels que par exemple les sels de l'acide hypophosphoreux et ses dérivés, tels que le phosphinate de diéthylaluminium ou le phosphinate d'aluminium, les esters phosphonates, les dérivés oligomères et polymères de l'acide méthanephosphonique, le 10-oxyde de 9,10-dihydro-9-oxa-10-phosphorylphénanthrène (DOPO) et ses composés substitués,
d) les agents retardateurs de flamme halogénés à base de chlore et de brome, tels que par exemple les oxydes de diphényle polybromés, le phosphate de tris(3-bromo-2,2-bis(bromométhyl)propyle), l'éthylènebis(tétrabromophtalimide), le tétrabromo-bisphénol A, le polystyrène bromé, le polybutadiène bromé,
e) les agents retardateurs de flamme sulfurés, tels que par exemple le soufre élémentaire, les disulfures et les polysulfures, le sulfure de thiurame, les dithiocarbamates, le mercaptobenzothiazole et les sulfénamides,
f) les borates, tels que par exemple le borate de zinc ou le borate de calcium,
g) les agents anti-goutte tels que par exemple le polytétrafluoréthylène,
h) les composés siliciés, tels que par exemple les polyphénylsiloxanes,
i) les substances formant des radicaux, tels que par exemple les alcoxyamines, les esters d'hydroxylamine, les composés azoïques, le dicumyle ou le polycumyle.

11. Mélange à mouler de plastiques selon l'une des revendications 7 à 10 **caractérisé en ce qu'**il contient des additifs choisis dans le groupe consistant en les absorbants UV, les photostabilisants, les stabilisants tels que les benzofurannones, les agents de nucléation, les modifiants choc, les plastifiants, les lubrifiants, les agents modifiant la rhéologie, les auxiliaires de mise en oeuvre, les pigments, les colorants, les azurants optiques, les matières actives antimicrobiennes, les antistatiques, les agents glissants, les agents anti-adhérence de contact, les agents de couplage, les dispersants, les agents de compatibilisation, les fixateurs d'oxygène, les agents de marquage, les agents anti-voile ou les fixateurs d'acide, de préférence les fixateurs d'acide à base de sels d'acides à longue chaîne tels que par exemple le stéarate de calcium, le stéarate de magnésium, le stéarate de zinc, le stéarate d'aluminium, le lactate de calcium, le stéaroyl-2-lactylate de calcium, ou d'hydrotalcites.

12. Mélange à mouler de plastiques selon l'une des revendications 7 à 11, **caractérisé en ce que** le mélange à mouler de plastiques contient en outre, en plus de l'au moins un copolymère et polymère et de l'au moins un plastique, 0,01 à 10 parties en poids, de préférence de 0,05 à 3 parties en poids, par rapport à la totalité de l'au moins un copolymère ou polymère et de l'au moins un plastique, au moins un stabilisant choisi dans le groupe consistant en les antioxydants phénoliques, les phosphites/phosphonites, les antioxydants aminés, les antioxydants sulfurés ou les hydroxylamines.

13. Mélange à mouler de plastiques selon la revendication précédente, **caractérisé en ce que** l'au moins un stabilisant est choisi dans le groupe consistant en
a) les antioxydants phénoliques, en particulier le 3-(3,5-di-tert-butyl-4-hydroxyphényl)propionate d'octadécyle, le tétrakis(3-(3,5-di-tert-butyl-4-hydroxyphényl)propionate de pentaérythritol, l'isocyanurate de tris(3,5-di-tert-butyl-4-hydroxyphényle), l'isocyanurate de 1,3-triméthyl-2,4,6-tris(3,5-di-tert-butyl-4-hydroxyphényle), le 1,3,5-triméthyl-2,4,6-tris(3,5-di-tert-butyl-4-hydroxybenzyl)benzène, le bis[3-(3-tert-butyl-4-hydroxy-5-méthylphényl)propionate de triéthylèneglycol, le N,N'-hexane-1,6-diyl-bis[3-(3,5-di-tert-butyl-4-hydroxyphényl)propionamide,
b) les phosphites/phosphonites, en particulier le phosphite de tris(2,4,-di-tert-butyl-phényle), le diphosphite de diisodécylpentaérythritol, le diphosphite de bis(2,4-di-tert-butyl-phényl)pentaérythritol, le diphosphite de bis(2,4-di-cumyl-phényl)pentaérythritol, le diphosphite de bis(2,6-di-tert-butyl-4-méthyl-phényl)pentaérythritol, le diphosphite de diisodécyloxypentaérythritol, le diphosphite de bis(2,4-di-tert-butyl-6-méthylphényl)pentaérythritol, le diphosphite de bis(2,4,6-tris(tert-butylphényl)pentaérythritol, le diphosphonite de tétrakis(2,4-di-tert-butylphényl)-4,4'-biphénylène,
c) les antioxydants aminés, en particulier la N,N'-di-isopropyl-p-phénylènediamine, la N,N'-di-sec-butyl-p-phénylènediamine, la N,N'-bis(1,4-diméthylpentyl)-p-phénylènediamine, la N,N'-bis(1-éthyl-3-méthylpentyl)-p-phénylènediamine, la N,N'-bis(1-méthylheptyl)-p-phénylènediamine, la N,N'-dicyclohexylphénylènediamine, la N,N'-diphényl-p-phénylènediamine, la N,N'-bis(2-naphtyl)-p-phénylènediamine, la N-isopropyl-N'-phényl-p-phénylènediamine, la N-(1,3-diméthylbutyl)-N'-phényl-p-phénylène-diamine, la N(1-méthylheptyl)-N'-phényl-p-phénylènediamine, la N-cyclohexyl-N'-phényl-p-phénylènediamine,
d) les antioxydants sulfurés, en particulier le thiodipropionate de distéaryle, le dipropionate de dilauryle,
e) les hydroxylamines, en particulier les N,N-dialkylhydroxylamines, la N,N-dibenzylhydroxylamine, la N,N-dilaurylhydroxylamine, la N,N-distéarylhydroxylamine, la N-benzyl-α-phénylnitrone, la N-octadécyl-α-hexadécylnitrone,
f) les amines à empêchement stérique, en particulier le succinate de 1,1-bis(2,2,6,6-tétraméthyl-4-pipéridyle), le sébaçate de bis(1,2,2,6,6-pentaméthyl-4-pipéridyle), le sébaçate de bis(1-octyloxy-2,2,6,6-tétraméthyl-4-pipéridyle), le n-butyl-3,5-di-tert-butyl-4-hydroxybenzylmalonate de bis(1,2,2,6,6-pentaméthyl-4-pipéridyle), le produit de condensation de la 1-(2-hydroxyéthyl)-2,2,6,6-tétraméthyl-4-hydroxypipéridine et de l'acide succinique, les produits de condensation linéaires ou cycliques de la N,N'-bis(2,2,6,6-tétraméthyl-4-pipéridyl)hexaméthylènediamine et de la 4-tert-octylamino-2,6-di-chloro-1,3,5-triazine, le nitrilotriacétate de tris(2,2,6,6-tétraméthyl-4-pipéridyle), le 1,2,3,4-butanetétracarboxylate de tétrakis(2,2,6,6-tétra-méthyl-4-pipéridyle), la 1,1'-(1,2-éthanediyl)-bis(3,3,5,5-tétraméthylpipérazinone), la 4-benzoyl-2,2,6,6-tétraméthyl-pipéridine, la 4-stéaryloxy-2,2,6,6-tétraméthylpipéridine, les produits de condensation linéaires ou cycliques de la N,N'-bis(2,2,6,6-tétraméthyl-4-pipéridyl)hexaméthylènediamine et de la 4-morpholino-2,6-dichloro-1,3,5-triazine, le produit de la réaction du 7,7,9,9-tétraméthyl-2-cycloundécyl-1-oxa-3,8-diaza-4-oxospiro[4,5]décane et de l'épichlorhydrine.

14. Mélange à mouler de plastiques selon l'une des revendications 7 à 13, **caractérisé en ce que** l'au moins un plastique est choisi dans le groupe consistant en
a) les polymères d'oléfines ou de dioléfines, tels que par exemple le polyéthylène (PEBD, PEBDL, PETBL, PEMD, PEHD), le polypropylène, le polyisobutylène, le poly-4-méthyl-pentène-1, le polybutadiène, le polyisoprène, le polycyclooctène, ainsi que les copolymères sous forme de structures statistiques ou à blocs tels que par exemple le polypropylène-polyéthylène (EP), l'EPM ou l'EPDM, l'éthylène-acétate de vinyle (EVA), l'éthylène-ester d'acide acrylique,
b) le polystyrène, le polyméthylstyrène, le styrène-butadiène, le styrène-butadiène-styrène (SBS), le styrène-isoprène, le styrène-butadiène-acrylonitrile (ABS), le styrène-acrylonitrile-acrylate (ASA), les polymères styrène-anhydride maléique, y compris les copolymères greffés correspondants, tels que par exemple le styrène sur le butadiène ou l'anhydride maléique sur le SBS,
c) les polymères halogénés tels que par exemple le poly(chlorure de vinyle) et le poly(chlorure de vinylidène),
d) les polymères d'esters insaturés, tels que par exemple les polyacrylates et les polyméthacrylates tels que le PMMA, le polyacrylonitrile,
e) les polymères d'alcools insaturés et de leurs dérivés, tels que par exemple le poly(alcool vinylique), le poly(acétate de vinyle), le polyvinylbutyral,
f) les polyacétals, tels que par exemple le polyoxyméthylène,
g) les poly(oxydes de phénylène) et leurs mélanges avec le polystyrène,
h) les polyuréthannes, en particulier les polyuréthannes linéaires,
i) les polyamides, tels que par exemple le polyamide-6, 6.6, 6.10, 4.6, 4.10, 6.12, 12.12, le polyamide 11, le polyamide 12, ainsi que les polyamides (partiellement) aromatiques, tels que par exemple le polyphtalamide,
j) les polyimides, les polyamide-imides, les polyétherimides, les polycétones, les polysulfones, les polyéthersulfones, le poly(sulfure de phénylène),
k) les polyesters, tels que par exemple le poly(téréphtalate d'éthylène) et le poly(téréphtalate de butylène), le poly(acide lactique),
l) le polycarbonate,
m) les dérivés de la cellulose, tels que par exemple le nitrate de cellulose, l'acétate de cellulose, le propionate de cellulose,
n) ainsi que les mélanges, combinaisons ou mélanges intimes de deux des polymères mentionnés ci-dessus ou plus.

15. Mélange à mouler de plastiques selon l'une des revendications 7 à 14, sous forme de pièces moulées par injection, de feuilles ou de films, de revêtements ou de vernis, de mousses, de fibres, de câbles, de gaines de câbles et de tubes, de profilés, de corps creux, de bandelettes, de membranes telles que par exemple les géomembranes, ou d'adhésifs, qui sont fabriqués par extrusion, moulage par injection, soufflage, calandrage, pressage, filage, rotomoulage ou par des procédés d'enduction et de revêtement, par exemple pour l'industrie électrique et électronique, l'industrie du bâtiment, l'industrie des transports, pour les applications médicales, pour les appareils ménagers et électriques, les pièces pour automobiles, les articles de grande consommation, les emballages, les meubles, les textiles.
